# EUROPEAN PATENT APPLICATION

(11) **EP 4 338 569 A2**
(43) Date of publication of application: **20.03.2024**
(21) Application number: 23197498.1
(22) Date of filing: 14.09.2023
(51) Int. Cl.: A01D 34/82, A01D 34/90, A01G 3/00, A01D 34/416

(54) **DEVICE FOR THE MAINTENANCE OF LAND**

(30) Priority: 15.09.2022 IT 202200018921; 15.09.2022 IT 202200018939
(71) Applicant: Stiga S.p.A. in breve anche St. S.p.A., 31033 Castelfranco Veneto (TV) (IT)
(72) Inventor: TOLOTTO, Daniele, 31040 Chiarano (TV) (IT); FIOR, Roberto, 31033 Castelfranco Veneto (TV) (IT); CAMERON, James, 31100 Treviso (IT)
(74) Representative: PGA S.p.A.

(57) **Abstract**

The present invention relates to a device (1) for executing maintenance operations in a land or garden. The device (1) comprises a stem (2), a work head (10) configured to execute the maintenance operations and a handle (20) configured to allow the gripping of said device during the maintenance operations. The orientation of the work head (10) with respect to said stem (2) is switchable at least between a first orientation and a second orientation. The arrangement of the handle (20) with respect to the stem (2) is switchable at least between a first arrangement and a second arrangement. According to the invention, the handle (20) is operatively connected to the work head (10) and is configured to act as a selector member of the work head (10), a switching in the arrangement of said handle (20) from the first arrangement to the second arrangement causing a simultaneous switching of the orientation of the work head (10) from the first orientation to the second orientation and a switching in the arrangement of the handle (20) from the second arrangement to the first arrangement causing a simultaneous switching of the orientation of the work head (10) from the second orientation to the first orientation.

## Description

### FIELD OF THE INVENTION

The present invention relates to a device for executing maintenance operations on land or gardens, for example grass mowing operations and/or pruning operations on plants, shrubs and hedges, in particular a device usable as a brush cutter and/or as a turf trimmer and/or as a hedge trimmer.

The present invention further relates to a handle for a device for executing maintenance operations on land or gardens, according to particularly advantageous configurations.

Lastly, the present invention relates to a use of a device for executing maintenance operations on land or gardens.

### BACKGROUND ART

Cutting devices for executing maintenance operations, such as mowing turfgrass and pruning plants, such as pruning hedges, are known in the field of gardening and land maintenance.

Such cutting devices commonly comprise a handle which the operator grasps to handle the cutting device, e.g., to orient the device in the desired direction to execute the maintenance operations. The handle can be rotated as desired to allow the operator to work in the most comfortable position.

Furthermore, cutting devices, for example hedge trimmers, are known in the background art, comprising an adjustable work head, so as to allow the hedge to be cut both laterally and above. In particular, the work head can be rotated with respect to the handlebar grasped by the operator.

However, during maintenance operations, it may be necessary to frequently vary the orientation of the work head, consequently forcing the operator to suspend the work, switch off the cutting device, unlock the work head and vary the orientation thereof. For example, while pruning hedges, the orientation of the work head of the device may need to be varied to allow the pruning of the side and top of the hedge. Such suspensions result in an increase in the time required to complete the work, an increase in effort from the operator and, consequently, a reduction in overall efficiency.

It should further be noted that the use of the cutting devices of the background art can negatively affect the final result of the maintenance operations, for example it can result in uneven pruning, since the operator tends to maintain uncomfortable positions so as to avoid not having to vary the orientation of the work head too often.

In the case of the brush cutters known in the background art, in order to maintain an adequate parallelism between the cutting head and the ground, the operator is forced, in conjunction with a variation in the slope of the ground, to modify the grip, assuming an uncomfortable grip which is considerably more tiring and potentially dangerous.

US6,260,278B1 describes a brush cutter in which the inclination of the work head with respect to the stem can be manually adjusted by the operator according to a discrete number of possible orientations. To this end, the brush cutter comprises a selector arranged along the stem in an intermediate position between the cutting head and the handle. In order to switch the inclination between the available orientations, the work head is hinged to the stem and the selector is connected to the head by means of a rigid rod, so that a rotation of the selector corresponds to a rotation of the work head. Although the ability to vary the inclination of the work head is appreciable, the technical solution disclosed in US6,260,278B1 is nevertheless not particularly advantageous especially from an ergonomic point of view, since the adjustment operations of the inclination of the work head are rather uncomfortable.

US4,603.478 describes a further brush cutter in which the inclination of the work head with respect to the stem can be manually adjusted by the operator according to a discrete number of possible orientations. In such a brush cutter, a variation of the inclination of the work head is obtained by driving a lever arranged near the work head and thus causing a weakening in the tension of a cable retaining a pin of the work head in predefined seats. The technical solution disclosed in US4,603,478 is also significantly lacking from a point of view of the comfort of use with regard to the operations of varying the inclination of the work head. CN2072354576U describes a brush cutter comprising a mechanism for adjusting the inclination at the interface between the stem and the work head, according to a plurality of predefined orientations. US7,584,542B2 discloses a brush cutter in which the position of the work head can be switched from horizontal to vertical, so as to allow the operator to use the brush cutter as a hedge trimmer while maintaining the same grip.

EP0005540A1 discloses a brush cutter which allows the inclination of the work head to be varied according to a plurality of predefined orientations, in which each switching of the inclination is subordinated to the pressure of a special button applied to the work head.

US6,439,088B1 discloses a brush cutter provided with a rotatable grip which allows the orientation of the work head to be switched, so that the brush cutter can be used as a hedge trimmer.

### OBJECTS OF THE INVENTION

Therefore, the object of the present invention is to solve at least one of the drawbacks and/or limitations of the previous solutions.

A first objective is to provide a cutting device for the maintenance of gardens and/or land capable of facilitating the maintenance operations.

A further objective is to provide a cutting device for the maintenance of gardens and/or land capable of making the maintenance operations easier for the operator.

A further objective is to provide a cutting device for the maintenance of gardens and/or land capable of reducing the time required to carry out the maintenance operations.

A further object is to provide a cutting device for the maintenance of gardens and/or land capable of improving the final result of the maintenance operations, i.e., of improving the effectiveness of the cutting device.

A further objective is to provide a cutting device for the maintenance of gardens and/or land capable of allowing the operator to easily and quickly find the best postural position for executing the maintenance operations.

A further objective is to provide a cutting device for the maintenance of gardens and/or land capable of limiting the operator from incurring skeletal or muscular pain due to incorrect postural positions maintained during the maintenance operations.

These and other objects, which will appear more clearly from the following description, are substantially achieved by an adjustment system of a cutting device and by a respective use in accordance with one or more of the appended claims and/or the following aspects.

### SUMMARY

Particular aspects of the present invention are listed below, which aspects can be non-optional or optional aspects of the present invention. Each of the following aspects of the present invention can therefore form an appropriate basis for any amendments to the appended claims. It should be noted that the provision of dependent aspects cannot in any way be traced back to a presumption of limited validity of the independent claims, which, on the contrary, are believed to be all new and inventive in light of the state of the art.

A 1st aspect of the invention relates to a device (1) for executing maintenance operations in a land or garden, in particular suitable for use as a brush cutter and/or as a turf trimmer and/or as a hedge trimmer, said device (1) comprising:
- a stem (2) extending in length between a first end portion (2a) and a second end portion (2b),
- a work head (10) configured to execute maintenance operations, said work head (10) being applied to said stem (2) at the first end portion (2a), and
- a handle (20) configured to allow the gripping of said device during maintenance operations, said handle (20) being applied to said stem (2) at the second end portion (2b) or at a portion of said stem (2) interposed between the first end portion (2a) and the second end portion (2b),

in which the orientation of said work head (10) with respect to said stem (2) is switchable at least between a first orientation and a second orientation,
in which the arrangement, in particular position and/or orientation, of said handle (20) with respect to said stem (2) is switchable at least between a first arrangement, in particular first position and/or first orientation, and a second arrangement, in particular second position and/or second orientation,
characterized in that said handle (20) is operatively connected to said work head (10) and is configured to act as a selector member of said work head (10),
in which a switching in the arrangement of said handle (20) from said first arrangement to said second arrangement results in a simultaneous switching of the orientation of said work head (10) from said first orientation to said second orientation and/or in which a switching in the arrangement of said handle (20) from said second arrangement to said first arrangement results in a simultaneous switching of the orientation of said work head (10) from said second orientation to said first orientation.

A 2nd aspect of the invention, dependent on the 1st aspect, relates to a device (1) for executing maintenance operations in a land or garden, in which said handle (20) has a distance from said work head (10), measured along said stem (2), greater than 200 mm, in particular greater than 300 mm, more in particular comprised between 300 mm and 1500 mm, even more in particular comprised between 600 mm and 1200 mm.

A 3rd aspect of the invention, dependent on the 1st aspect or the 2nd aspect, relates to a device (1) for executing maintenance operations in a land or garden, in which the work head (10) and the handle (20) are movable by rotation around respective driving axes substantially parallel to each other.

A 4th aspect of the invention, dependent on any one of the aspects from the 1st aspect to the 3rd aspect, relates to a device (1) for executing maintenance operations in a land or garden, in which the work head (10) is movable by rotation in a first direction and the handle (20) is movable by rotation in a second direction, said first direction being opposite with respect to the second direction.

A 5th aspect of the invention, dependent on the 4th aspect, relates to a device (1) for executing maintenance operations in a land or garden, in which a rotation of the handle (20) in a clockwise direction determines a rotation of the work head (10) in a counter-clockwise direction and/or in which a rotation of the handle (20) in a counter-clockwise direction determines a rotation of the work head (10) in a clockwise direction.

A 6th aspect of the invention, dependent on any one of the aspects from the 1st aspect to the 5th aspect, relates to a device (1) for executing maintenance operations in a land or garden, in which the handle (20) is rotatably movable between said first arrangement and said second arrangement in a continuous manner, in particular in which the handle (20) is positionable in an ideally infinite number of intermediate arrangements, in particular intermediate positions and/or intermediate orientations, between said first arrangement and said second arrangement, and in which a movement of the handle (20) in a continuous manner between the first arrangement and the second arrangement determines a simultaneous movement of the work head (10) in a continuous manner between the first orientation and the second orientation.

A 7th aspect of the invention, dependent on any one of the aspects from the 1st aspect to the 5th aspect, relates to a device (1) for executing maintenance operations in a land or garden, in which the handle (20) is rotatably movable between said first arrangement and said second arrangement in a discrete manner, in particular in which the handle (20) is positionable in a plurality of intermediate arrangements, in particular intermediate positions and/or intermediate orientations, between said first arrangement and said second arrangement, and in which a movement of the handle (20) in a discrete manner between the first arrangement and the second arrangement determines a simultaneous movement of the work head (10) in a discrete manner between the first orientation and the second orientation.

An 8th aspect of the invention, dependent on any one of the aspects from the 1st aspect to the 7th aspect, relates to a device (1) for executing maintenance operations in a land or garden, in which the work head (10) is rotatably movable between said first orientation and said second orientation in a continuous manner, in particular in which the work head (10) can be orientated in an ideally infinite number of intermediate orientations between said first orientation and said second orientation.

A 9th aspect of the invention, dependent on any one of the aspects from the 1st aspect to the 7th aspect, relates to a device (1) for executing maintenance operations in a land or garden, in which the work head (10) is rotatably movable between said first orientation and said second orientation in a discrete manner, in particular in which the work head (10) can be orientated in a plurality of intermediate orientations between said first orientation and said second orientation.

A 10th aspect of the invention, dependent on any one of the aspects from the 1st aspect to the 9th aspect, relates to a device (1) for executing maintenance operations in a land or garden, in which said handle (20) is rotatably movable around a drive axis (M) thereof with respect to said stem (2) between the first arrangement and the second arrangement, in which a rotation of said handle (20) around said drive axis determines the switching of the orientation of said work head (10) from said first orientation to said second orientation and from said second orientation to said first orientation and in which said drive axis is transverse, substantially orthogonal, to said stem (2), the handle (20) being rotatably movable by an angular stroke comprised between 30° and 180°, in particular comprised between 45° and 150°, preferably comprised between 80° and 150°.

An 11th aspect of the invention, dependent on any one of the aspects from the 1st aspect to the 10th aspect, relates to a device (1) for executing maintenance operations in a land or garden, in which said handle (20) comprises a knob rotatable around a drive axis and extending in length along said drive axis or parallel to said drive axis, optionally said knob having a substantially cylindrical shape, said knob rotation axis being transverse, optionally substantially orthogonal, to the longitudinal direction of the stem, and in which a rotation of said knob around said rotation axis determines the switching of the orientation of said work head (10) from said first orientation to said second orientation and from said second orientation to said first orientation.

A 12th aspect of the invention, dependent on the 11th aspect, relates to a device (1) for executing maintenance operations in a land or garden, in which said knob is rotatable with respect to a body of said handle (20).

A 13th aspect of the invention, dependent on the 11th aspect or the 12th aspect, relates to a device (1) for executing maintenance operations in a land or garden, in which said knob is arranged at a gripping portion (21) of the handle, in particular in which said gripping portion (21) of the handle (20) is spaced with respect to an attachment portion between said stem (2) and said handle (20).

A 14th aspect of the invention, dependent on any one of the aspects from the 1st aspect to the 13th aspect, relates to a device (1) for executing maintenance operations in a land or garden, in which said device (1) comprises a drive system (30) placed in connection between said handle (20) and said work head (10), said drive system (30) being configured to transfer a movement of the handle (20) to the work head (10).

A 15th aspect of the invention, dependent on the 14th aspect, relates to a device (1) for executing maintenance operations in a land or garden, in which said drive system (30) comprises one or more traction cables, in particular configured to ideally support only traction stresses.

A 16th aspect of the invention, dependent on the 14th aspect or the 15th aspect, relates to a device (1) for executing maintenance operations in a land or garden, in which said drive system (30) comprises one and only one traction cable and at least one elastic return element connected to the work head (10), said traction cable being in particular configured to ideally support only traction stresses.

A 17th aspect of the invention, dependent on any one of the aspects from the 14th aspect to the 16th aspect, relates to a device (1) for executing maintenance operations in a land or garden, in which said drive system (30) comprises a flexible rod or cable transmission, in particular said flexible rod or cable being configured to withstand traction and compression stresses, said flexible rod or cable transmission comprising:
- a first pulley (34) integral with the handle (20),
- a second pulley (35) integral with the work head (10),
- a flexible rod or a cable (36) interposed in connection between said first pulley and said second pulley.

An 18th aspect of the invention, dependent on any one of the aspects from the 14th aspect to the 17th aspect, relates to a device (1) for executing maintenance operations in a land or garden, in which said drive system (30) comprises a belt or chain transmission interposed in connection between the work head (10) and said handle (20), said belt or chain transmission comprising:
- a first toothed wheel integral with the handle (20),
- a second toothed wheel integral with the work head (10),
- a chain or belt wound around said first toothed wheel and said second toothed wheel.

A 19th aspect of the invention, dependent on any one of the aspects from the 14th aspect to the 18th aspect, relates to a device (1) for executing maintenance operations in a land or garden, in which said drive system (30) comprises a rigid transmission bar, in particular configured to support traction and compression stresses, interposed in connection between the work head (10) and said handle (20).

A 20th aspect of the invention, dependent on any one of the aspects from the 14th aspect to the 19th aspect, relates to a device (1) for executing maintenance operations in a land or garden, in which said drive system (30) comprises a rack transmission, in particular in which said rack transmission comprises:
- a first toothed wheel (31) integral with the handle (20),
- a second toothed wheel (32) integral with the work head (10),
- a bar (33) interposed between said first toothed wheel and said second toothed wheel, said bar (33) comprising at least one toothing engaged with said first toothed wheel and/or said second toothed wheel.

A 21st aspect of the invention, dependent on the 20th aspect, relates to a device (1) for executing maintenance operations in a land or garden, in which said bar extends in length between a first end and a second end, in which the first end comprises a first toothing engaged with the first toothed wheel of the handle (20) and in which the second end comprises a second toothing engaged with the second toothed wheel of the work head (10).

A 22nd aspect of the invention, dependent on any one of the aspects from the 14th aspect to the 16th aspect, relates to a device (1) for executing maintenance operations in a land or garden, in which said drive system (30) is positioned inside the stem (2), in particular in which the stem (2) is, at least in part, internally hollow.

A 23rd aspect of the invention, dependent on any one of the aspects from the 1st aspect to the 22nd aspect, relates to a device (1) for executing maintenance operations in a land or garden, in which the work head (10) is rotatably movable between the first orientation and the second orientation around an adjustment axis (H), said adjustment axis (H) of the work head (10) being transverse, optionally substantially orthogonal, to the longitudinal direction of said stem (2).

A 24th aspect of the invention, dependent on any one of the aspects from the 1st aspect to the 23rd aspect, relates to a device (1) for executing maintenance operations in a land or garden, in which the work head (10) is rotatably movable by an angular stroke comprised between 30° and 180°, in particular comprised between 45° and 150°, preferably comprised between 80° and 150°, preferably at least 80°.

A 25th aspect of the invention, dependent on any one of the aspects from the 1st aspect to the 24th aspect, relates to a device (1) for executing maintenance operations in a land or garden, in which the work head (10) comprises a cutting head configured to execute cutting maintenance operations, e.g., cutting operations of a turfgrass or pruning operations for example of hedges.

A 26th aspect of the invention, dependent on the 25th aspect, relates to a device (1) for executing maintenance operations in a land or garden, in which the cutting head comprises a turf-trimming or lawnmower head (11) comprising one or more blades or one or more cutting wires, for example one or more Nylon wires.

A 27th aspect of the invention, dependent on the 26th aspect, relates to a device (1) for executing maintenance operations in a land or garden, in which said turf trimmer or grass cutter head is integral with a shaft rotating around a rotation axis (W) to define the rotation, in particular a complete rotation, of said one or more blades or said one or more wires, said rotation axis (W) of the cutting head being movable between said first orientation and said second orientation.

A 28th aspect of the invention, dependent on any one of the aspects from the 25th aspect to the 27th aspect, relates to a device (1) for executing maintenance operations in a land or garden, in which the cutting head comprises a pruning blade (12) extending in length along a main direction (MD), in particular in which said pruning blade is a hedge-trimmer blade.

A 29th aspect of the invention, dependent on the 28th aspect, relates to a device (1) for executing maintenance operations in a land or garden, in which said main direction (MD) is movable between said first orientation and said second orientation.

A 30th aspect of the invention, dependent on any one of the aspects from the 1st aspect to the 29th aspect, relates to a device (1) for executing maintenance operations in a land or garden, in which the handle (20) extends in length transversely to the drive axis (M) thereof along an extension direction (ED), in which the first arrangement of the handle (20) determines the first orientation of the work head (10) and in which the second arrangement of the handle (20) determines the second orientation of the work head (10).

A 31st aspect of the invention, dependent on the 30th aspect, relates to a device (1) for executing maintenance operations in a land or garden, the cutting head comprising the turf-trimming or lawnmower head, in which in the first arrangement of the handle (20) and in the first orientation of the work head (10):
- the extension direction (ED) of the handle (20) defines with a portion of the stem (2), interposed between said handle (20) and said first end portion (2a) of the stem (2), an angle (α) comprised between 20° and 90°, in particular between 45° and 70°, and
- the rotation axis (W) of the rotary shaft of the cutting head defines with the longitudinal direction of the stem (2) an angle comprised between 0° and 30°, in particular between 0° and 20°, optionally in which the rotation axis (W) of the rotary shaft of the cutting head is substantially parallel to the longitudinal direction of the stem (2).

A 32nd aspect of the invention, dependent on the 31st aspect, relates to a device (1) for executing maintenance operations in a land or garden, in which in the second arrangement of the handle (20) and in the second orientation of the work head (10):
- the extension direction (ED) of the handle (20) defines with said portion of the stem (2), interposed between said handle (20) and said first end portion (2a) of the stem (2), an angle (β) comprised between 130° and 180°, in particular between 140° and 165°, and
- the rotation axis (W) of the rotary shaft of the cutting head defines with the longitudinal direction of the stem (2) an angle comprised between 75° and 100°, in particular between 80° and 90°, optionally in which the rotation axis (W) of the rotary shaft of the cutting head is substantially orthogonal to the longitudinal direction of the stem (2).

A 33rd aspect of the invention, dependent on any one of the aspects from the 30th aspect to the 32nd aspect, relates to a device (1) for executing maintenance operations in a land or garden, in which the cutting head comprising the pruning blade (12), in which in the first arrangement of the handle (20) and in the first orientation of the work head (10):
- the extension direction (ED) of the handle (20) defines with the portion of the stem (2), interposed between said handle (20) and said first end portion (2a), an angle comprised between 20° and 90°, in particular between 45° and 70°, optionally in which the main direction (MD) of the cutting head is substantially orthogonal to the longitudinal direction of the stem (2), and
- the main direction (MD) of the pruning blade (12) defines with the portion of the stem (2), interposed between said handle (20) and said first end portion (2a), an angle comprised between 75° and 100°, in particular between 80° and 95°, in particular substantially equal to 90°.

A 34th aspect of the invention, dependent on the 33rd aspect, relates to a device (1) for executing maintenance operations in a land or garden, in which in the second arrangement of the handle (20) and in the second orientation of the work head (10) the main direction (MD) of the cutting head defines with the portion of the stem (2), interposed between said handle (20) and said first end portion (2a), an angle comprised between 20° and 90°, in particular between 45° and 70°.

A 35th aspect of the invention, dependent on any one of the aspects from the 1st aspect to the 34th aspect, relates to a device (1) for executing maintenance operations in a land or garden, in which said device is configurable in a parking configuration in which the work head (10) is resting on the ground to define a support plane (SP) and the stem (2) is in a transverse position, optionally orthogonal, to the ground.

A 36th aspect of the invention, dependent on any one of the aspects from the 1st aspect to the 35th aspect, relates to a device (1) for executing maintenance operations in a land or garden, in which said parking configuration is maintained autonomously by the device in a stable manner, in particular without the aid of a further support, in particular without the aid of a wall support.

A 37th aspect of the invention, dependent on the 35th aspect or the 36th aspect, relates to a device (1) for executing maintenance operations in a land or garden, in which, during said stable parking configuration, the work head (10) is arranged in the first orientation, in said first orientation the rotation axis (W) of the rotary shaft of the cutting head being substantially orthogonal to the support plane (SP), in particular orthogonal to the ground, optionally in which in the first orientation the rotation axis (W) of the rotary shaft of the cutting head is substantially parallel to the longitudinal direction of the stem (2).

A 38th aspect of the invention, dependent on the 35th aspect or the 36th aspect, relates to a device (1) for executing maintenance operations in a land or garden, in which, in said stable parking configuration, the work head (10) is arranged in an intermediate orientation between said first orientation and said second orientation.

A 39th aspect of the invention, dependent on any one of the aspects from the 35th aspect to the 38th aspect, relates to a device (1) for executing maintenance operations in a land or garden, said work head (10) further comprising a protective casing enclosing said cutting head, said protective casing being notably intended to prevent fragments of grass and/or debris from striking the operator during maintenance operations, in which said protective casing exhibits, in the face facing the ground, a support surface, in which said support surface defines the support plane (SP) of said device (1) in said parking configuration.

A 40th aspect of the invention, dependent on any one of the aspects from the 1st aspect to the 39th aspect, relates to a device (1) for executing maintenance operations in a land or garden, in which a rotation of the handle (20), which determines an approach of the gripping portion (21) of the handle (20) to the second end portion (2b) of the stem (2), determines a respective rotation of the work head (10):
- away from said second end portion (2b) of the stem (2), and/or
- to increase an angle interposed between said stem (2) and a rotation axis (W) of a rotary shaft of the work head (10).

A 41st aspect of the invention, dependent on any one of the aspects from the 1st aspect to the 40th aspect, relates to a device (1) for executing maintenance operations in a land or garden, in which a rotation of the handle (20), which determines a distancing of the gripping portion (21) of the handle (20) from the second end portion (2b) of the stem (2), determines a respective rotation of the work head (10):
- approaching said second end portion (2b) of the stem (2), and/or
- to reduce an angle interposed between said stem (2) and a rotation axis (W) of a rotary shaft of the work head (10).

A 42nd aspect of the invention, dependent on any one of the aspects from the 1 st aspect to the 41 st aspect, relates to a device (1) for executing maintenance operations in a land or garden, in which said device (1) comprises an electric drive system (30) comprising an electric actuator operatively connected to the work head (10) and configured to move the work head (10) between the first orientation and the second orientation, such that a movement of the handle (20) between said first arrangement and said second arrangement electrically commands said actuator to move the work head (10).

A 43rd aspect of the invention, dependent on the 42nd aspect, relates to a device (1) for executing maintenance operations in a land or garden, in which the electric drive system (30) comprises a position detector operatively connected to the handle (20) and configured to detect an arrangement of said handle (20) between the first arrangement and the second arrangement, optionally said position detector comprising an angular detector of the angular position of the handle (20).

A 44th aspect of the invention, dependent on the 43rd aspect, relates to a device (1) for executing maintenance operations in a land or garden, in which the electric drive system (30) comprises a control unit operatively connected to the actuator of the work head (10) and to the position detector of the handle (20), said control unit being configured to:
- detect an arrangement of the handle (20) between said first arrangement and said second arrangement based on a signal emitted by the position detector,
- as a function of the detected arrangement of the handle (20), commanding the actuator of the work head (10) to move the work head (10) in a respective orientation between said first orientation and said second orientation.

A 45th aspect of the invention, dependent on any one of the aspects from the 1st aspect to the 44th aspect, relates to a device (1) for executing maintenance operations in a land or garden, in which said device (1) is a portable device, in particular being carried by hand or by shoulder strap by the operator during the execution of maintenance operations.

A 46th aspect of the invention, dependent on any one of the aspects from the 1st aspect to the 45th aspect, relates to a device (1) for executing maintenance operations in a land or garden, in which the device (1) comprises a locking system of the handle (20) which is configured to maintain said handle (20) in a desired position between said first arrangement and said second arrangement during maintenance operations, in particular to maintain said handle (20) in a desired position chosen from a plurality, in particular from an ideally infinite number, of arrangements between said first arrangement and said second arrangement.

A 47th aspect of the invention, dependent on any one of the aspects from the 1st aspect to the 46th aspect, relates to a device (1) for executing maintenance operations in a land or garden, in which said device (1) comprises at least one motor, in particular an electric motor or a combustion engine, operatively connected to the work head (10), in particular to the cutting head, to execute maintenance operations.

A 48th aspect of the invention, dependent on the 47th aspect, relates to a device (1) for executing maintenance operations in a land or garden, in which said motor is mounted at the work head (10).

A 49th aspect of the invention, dependent on the 47th aspect, relates to a device (1) for executing maintenance operations in a land or garden, in which said motor is mounted on the stem (2) in an opposite and distal position with respect to the work head (10), in particular the motor being mounted at the second end portion (2b), optionally in which the handle (20) is interposed between said motor and said work head (10).

A 50th aspect of the invention, dependent on any one of the aspects from the 1st aspect to the 49th aspect, relates to a device (1) for executing maintenance operations in a land or garden, in which said handle (20) comprises:
- at least a first gripping section extending along a first direction,
- at least a second gripping section extending along a second direction and
- at least a third gripping section extending along a third direction,
in which the first gripping section is interposed in connection between the second gripping section and the third gripping section of the handle.

A 51st aspect of the invention, dependent on the 50th aspect, relates to a device (1) for executing maintenance operations in a land or garden, in which said first gripping section, second gripping section and third gripping section are transverse to each other.

A 52nd aspect of the invention, dependent on the 50th aspect to the 51st aspect, relates to a device (1) for executing maintenance operations in a land or garden, in which the first gripping section is interposed in connection between said second gripping section and said third gripping section.

A 53rd aspect of the invention, dependent on any one of the aspects from the 50th aspect to the 52nd aspect, relates to a device (1) for executing maintenance operations in a land or garden, in which said handle (20) further comprises a fourth gripping section, the third gripping section being interposed in connection between said first gripping section and said fourth gripping section, the second gripping section being optionally substantially parallel to the fourth gripping section.

A 54th aspect of the invention, dependent on any one of the aspects from the 50th aspect to the 53rd aspect, is related to a device (1) for executing maintenance operations in a land or garden, in which the orientation of said work head (10) with respect to said handle (20) is such that said work head (10) is substantially parallel to the ground when said first gripping section is substantially parallel to the ground and whereby said work head (10) is substantially orthogonal to the ground when said third gripping section is substantially parallel to the ground.

A 55th aspect of the invention, dependent on any one of the aspects from the 1st aspect to the 54th aspect, relates to a device (1) for executing maintenance operations in a land or garden, in which the extension of said handle (20) is notably adjustable by a user and in which said handle (20) comprises at least one base portion and at least one adjustment portion, said adjustment portion being movable towards and away with respect to the base portion.

A 56th aspect of the invention, dependent on the 55th aspect, relates to a device (1) for executing maintenance operations in a land or garden, in which said adjustment portion is positionable, relative to said base portion, at least in:
- a proximal position, in which the adjustment portion has a first distance with respect to the base portion, and
- a distal position, in which the adjustment portion has a second distance with respect to the base portion, in which said first distance is less than said second distance.

A 57th aspect of the invention relates to a use of a device (1) for executing maintenance operations in a land or garden, in which said device (1) is according to any one of the aspects from the 1st aspect to the 56th aspect,
said use comprising at least the step of moving said handle (20) in a desired arrangement between said first arrangement and said second arrangement,
said step of moving the handle (20) causing a simultaneous movement of the work head (10) of the device (1) in a respective orientation between said first orientation and said second orientation.

A 58th aspect of the invention, dependent on the 57th aspect, relates to a use of a device (1) for executing maintenance operations in a land or garden, in which said use comprises the steps of:
i) maintaining a grip of the handle (20);
ii) moving said handle (20) between the first arrangement and the second arrangement,
in which steps i) and ii) are simultaneous.

A 59th aspect of the invention, dependent on the 57th aspect or the 58th aspect, relates to a use of a device (1) for executing maintenance operations in a land or garden, in which the step of moving the handle (20) between the first arrangement and the second arrangement is executable, by the operator, simultaneously with the step of executing maintenance operations,

A 60th aspect of the invention, dependent on the 59th aspect, relates to a use of a device (1) for executing maintenance operations in a land or garden, in which the step of executing the maintenance operations comprises activating the work head (10), in particular said maintenance operations comprising cutting operations executed by the work head (10).

A 61st aspect of the invention relates to a handle (20) for a device (1) adapted to execute maintenance operations in a land or garden, said device (1) being in particular suitable for use as a brush cutter and/or as a turf trimmer and/or as a hedge trimmer, said handle (20) comprising:
- at least one gripping portion (21) configured to allow an operator to grasp said device (1) by gripping said gripping portion (21), and
- at least one constraining portion (22) configured to establish a constraint between said gripping portion (21) and a structural component of the device (1), said structural component being notably a stem (2).

A 62nd aspect of the invention, dependent on the 61st aspect, relates to a handle (20) for a device (1) adapted to execute maintenance operations in a land or garden, in which said gripping portion (21) comprises:
- at least a first gripping section (41) extending along a first direction (41a),
- at least a second gripping section (42) extending along a second direction (42a) and
- at least a third gripping section (43) extending along a third direction (43a).

A 63rd aspect of the invention, dependent on the 62nd aspect, relates to a handle (20) for a device (1) adapted to execute maintenance operations in a land or garden, in which the first section (41) is interposed in connection between the second section (42) and the third section (43) of the handle (20).

A 64th aspect of the invention, dependent on the 63rd aspect, relates to a handle (20) for a device (1) adapted to execute maintenance operations in a land or garden, in which a first plane is passing through the first section (41) and the second section (42) and in which a second plane is passing through the first section (41) and the third section (43).

A 65th aspect of the invention, dependent on the 64th aspect, relates to a handle (20) for a device (1) adapted to execute maintenance operations in a land or garden, in which the constraining portion (22) or a rotation joint (27) of the handle is outside, in particular spaced from, at least one of the first plane and the second plane.

A 66th aspect of the invention, dependent on any one of the aspects from the 62nd aspect to the 65th aspect, relates to a handle (20) for a device (1) adapted to execute maintenance operations in a land or garden, in which the second direction (42a) is transverse to the first direction (41a) and in which the third direction (43a) is transverse to the first direction (41a).

A 67th aspect of the invention, dependent on the 66th aspect, relates to a handle (20) for a device (1) adapted to execute maintenance operations in a land or garden, in which the third direction (43a) is transverse to the second direction (42a).

A 68th aspect of the invention, dependent on the 66th aspect, relates to a handle (20) for a device (1) adapted to execute maintenance operations in a land or garden, in which the third direction (43a) is parallel to the second direction (42a).

A 69th aspect of the invention, dependent on any one of the aspects from the 62nd aspect to the 68th aspect, relates to a handle (20) for a device (1) adapted to execute maintenance operations in a land or garden, in which the first plane and the second plane are distinct and transverse to each other.

A 70th aspect of the invention, dependent on the 69th aspect, relates to a handle (20) for a device (1) adapted to execute maintenance operations in a land or garden, in which the first plane and the second plane define an inclination angle therebetween which is comprised between 45° and 105°, preferably comprised between 60° and 105°, more preferably comprised between 60° and 90°, even more preferably about 70°.

A 71st aspect of the invention, dependent on any one of the aspects from the 62nd aspect to the 70th aspect, relates to a handle (20) for a device (1) adapted to execute maintenance operations in a land or garden, in which the first direction (41a) is substantially orthogonal to the third direction (43a).

A 72nd aspect of the invention, dependent on any one of the aspects from the 62nd aspect to the 71st aspect, relates to a handle (20) for a device (1) adapted to execute maintenance operations in a land or garden, in which the second section (42) is interposed in connection between the first section (41) and the constraining portion (22).

A 73rd aspect of the invention, dependent on any one of the aspects from the 62nd aspect to the 72nd aspect, relates to a handle (20) for a device (1) adapted to execute maintenance operations in a land or garden, in which the handle (20) comprises a fourth gripping section (44) extending along a fourth direction (44a) and interposed in connection between the third section (43) and the constraining portion (22), a third plane passing through the third section (43) and the fourth section (44).

A 74th aspect of the invention, dependent on the 73rd aspect, relates to a handle (20) for a device (1) adapted to execute maintenance operations in a land or garden, in which the constraining portion (22) is interposed in connection between the second section (42) and the fourth section (44),

A 75th aspect of the invention, dependent on the 73rd aspect or the 74th aspect, is related to a handle (20) for a device (1) adapted to execute maintenance operations in a land or garden, in which the fourth section (44) is transverse, optionally orthogonal, to at least one of the first plane and the second plane.

A 76th aspect of the invention, dependent on any one of the aspects from the 73rd aspect to the 75th aspect, is related to a handle (20) for a device (1) adapted to execute maintenance operations in a land or garden, in which the first plane, the second plane and the third plane are transverse to each other.

A 77th aspect of the invention, dependent on the 76th aspect, relates to a handle (20) for a device (1) adapted to execute maintenance operations in a land or garden, in which the third plane is transverse to the first plane and in which the third plane is transverse to the second plane.

A 78th aspect of the invention, dependent on any one of the aspects from the 73rd aspect to the 77th aspect, relates to a handle (20) for a device (1) adapted to execute maintenance operations in a land or garden, in which said fourth direction (44a) is:
- transverse, optionally orthogonal, to the third direction (43a) and
- transverse, optionally orthogonal, to the first direction (41a).

A 79th aspect of the invention, dependent on any one of the aspects from the 73rd aspect to the 78th aspect, relates to a handle (20) for a device (1) adapted to execute maintenance operations in a land or garden, in which the third plane is perpendicular to the second plane.

An 80th aspect of the invention, dependent on any one of the aspects from the 62nd aspect to the 79th aspect, relates to a handle (20) for a device (1) adapted to execute maintenance operations in a land or garden, in which said constraining portion (22) defines a seat adapted to receive said structural component, in particular said stem (2), of the device (1) along a longitudinal direction and in which at least one of the first plane and the second plane is transverse, optionally orthogonal, to said longitudinal direction.

An 81st aspect of the invention, dependent on the 80th aspect, relates to a handle (20) for a device (1) adapted to execute maintenance operations in a land or garden, in which the second plane is perpendicular to the longitudinal direction.

An 82nd aspect of the invention, dependent on the 80th aspect or the 81st aspect, relates to a handle (20) for a device (1) adapted to execute maintenance operations in a land or garden, in which the first direction (41a) is transverse, in particular orthogonal, to the longitudinal direction.

An 83rd aspect of the invention, dependent on any one of the aspects from the 62nd aspect to the 82nd aspect, relates to a handle (20) for a device (1) adapted to execute maintenance operations in a land or garden, in which said handle (20) comprises a joint (27) configured to allow a rotation of the first, second and third section (43), in particular also of the fourth section (44), about a registration axis (M) such that a rotation of the handle (20) around said registration axis determines a variation in the distance interposed between the first section (41) and the longitudinal axis of the stem (2).

An 84th aspect of the invention, dependent on the 83rd aspect, relates to a handle (20) for a device (1) adapted to execute maintenance operations in a land or garden, in which said joint (27) is outside, in particular spaced from, at least one of the first plane and the second plane.

An 85th aspect of the invention, dependent on the 83rd aspect or the 84th aspect, relates to a handle (20) for a device (1) adapted to execute maintenance operations in a land or garden, in which said registration axis (M) is orthogonal to the longitudinal direction of the constraining portion (22).

An 86th aspect of the invention, dependent on any one of the aspects from the 83rd aspect to the 85th aspect, is related to a handle (20) for a device (1) adapted to execute maintenance operations in a land or garden, in which said registration axis (M) is parallel to the first direction (41a), in particular also during a rotation of the handle (20).

An 87th aspect of the invention, dependent on any one of the aspects from the 83rd aspect to the 86th aspect, relates to a handle (20) for a device (1) adapted to execute maintenance operations in a land or garden, in which the second plane is orthogonal to the longitudinal direction of the stem at least in an angular position of the handle (20) and in which the second plane varies the inclination thereof with respect to the longitudinal direction of the stem during a rotation of the handle (20) around the registration axis (M).

An 88th aspect of the invention, dependent on any one of the aspects from the 62nd aspect to the 87th aspect, relates to a handle (20) for a device (1) adapted to execute maintenance operations in a land or garden, in which the first section (41) and the third section (43), optionally also the second section (42) and optionally also the fourth section (44), have a substantially circular or elliptical sectional shape.

An 89th aspect of the invention, dependent on any one of the aspects from the 62nd aspect to the 88th aspect, relates to a handle (20) for a device (1) adapted to execute maintenance operations in a land or garden, in which the first section (41), the second section (42), the third section (43) and optionally also the fourth section (44) define a single body.

A 90th aspect of the invention, dependent on the 89th aspect, relates to a handle (20) for a device (1) adapted to execute maintenance operations in a land or garden, in which a first curvilinear connecting section extends seamlessly between said first section (41) and said third section (43).

A 91st aspect of the invention, dependent on the 89th aspect or the 90th aspect, relates to a handle (20) for a device (1) adapted to execute maintenance operations in a land or garden, in which a second curvilinear connecting section extends seamlessly between said first section (41) and said second section (42).

A 92nd aspect of the invention, dependent on any one of the aspects from the 89th aspect to the 91st aspect, is related to a handle (20) for a device (1) adapted to execute maintenance operations in a land or garden, in which a third curvilinear connecting section extends seamlessly between said third section (43) and said fourth section (44).

A 93rd aspect of the invention, dependent on any one of the aspects from the 61st aspect to the 92nd aspect, relates to a handle (20) for a device (1) adapted to execute maintenance operations in a land or garden, in which said handle (20) being an extendable-type handle (20), in which the extension of said gripping portion (21) is notably adjustable by a user.

A 94th aspect of the invention, dependent on the 93rd aspect, relates to a handle (20) for a device (1) adapted to execute maintenance operations in a land or garden, in which said handle (20) is configured to provide a discrete number of extensions of said gripping portion (21), so that the adjustment of the extension of said gripping portion (21) is performed by a user by means of a step of selecting one of the available extensions of said gripping portion (21).

A 95th aspect of the invention, dependent on any one of the aspects from the 61st aspect to the 94th aspect, relates to a handle (20) for a device (1) adapted to execute maintenance operations in a land or garden, in which said gripping portion (21) comprises at least one base portion (23) and at least one adjustment portion (24), said base portion (23) being interposed between said adjustment portion (24) and said constraining portion (22), said adjustment portion (24) being movable towards and away with respect to the base portion (23).

A 96th aspect of the invention, dependent on the 95th aspect, relates to a handle (20) for a device (1) adapted to execute maintenance operations in a land or garden, in which said adjustment portion (24) is positionable, relative to said base portion (23), at least in:
- a proximal position, in which the adjustment portion (24) has a first distance with respect to the base portion (23), and
- a distal position, in which the adjustment portion (24) has a second distance with respect to the base portion (23), in which said first distance is less than said second distance.

A 97th aspect of the invention, dependent on the 95th aspect or the 96th aspect, relates to a handle (20) for a device (1) adapted to execute maintenance operations in a land or garden, in which the adjustment portion (24) is further positionable, relative to said base portion (23), in one or more, for example two or three, intermediate positions interposed between the distal position and the proximal position.

A 98th aspect of the invention, dependent on any one of the aspects from the 95th aspect to the 97th aspect, relates to a handle (20) for a device (1) adapted to execute maintenance operations in a land or garden, in which said base portion (23) is connected to said constraining portion (22).

A 99th aspect of the invention, dependent on the 98th aspect, relates to a handle (20) for a device (1) adapted to execute maintenance operations in a land or garden, in which said base portion (23) is connected to said constraining portion (22) by means of a joint (27) configured to allow a rotation of said gripping portion (21) with respect to said structural component, in particular with respect to said stem (2).

A 100th aspect of the invention, dependent on any one of the aspects from the 95th aspect to the 99th aspect, relates to a handle (20) for a device (1) adapted to execute maintenance operations in a land or garden, in which said adjustment portion (24) is selectively lockable in the proximal position and in the distal position, optionally also in one or more of the intermediate positions interposed between said distal position and said proximal position.

A 101st aspect of the invention, dependent on any one of the aspects from the 95th aspect to the 100th aspect, relates to a handle (20) for a device (1) adapted to execute maintenance operations in a land or garden, in which said handle (20) is configured to define, between the proximal position and the distal position of said adjustment portion (24), a stroke comprised between 30 mm and 300 mm, in particular between 50 mm and 200 mm, more in particular between 50 mm and 150 mm.

A 102nd aspect of the invention, dependent on any one of the aspects from the 95th aspect to the 101st aspect, relates to a handle (20) for a device (1) adapted to execute maintenance operations in a land or garden, in which said constraining portion (22) defines a seat adapted to receive said structural device (1), in particular said stem (2), of the device (1) along a longitudinal direction and in which said adjustment portion (24) comprises at least one transverse section, in particular substantially orthogonal, to said longitudinal direction.

A 103rd aspect of the invention, dependent on the 102nd aspect, relates to a handle (20) for a device (1) adapted to execute maintenance operations in a land or garden, in which said transverse section, in particular substantially orthogonal, during the passage from the proximal position to the distal position and vice versa of said adjustment portion (24), substantially retains the same orientation with respect to said longitudinal direction.

A 104th aspect of the invention, dependent on any one of the aspects from the 95th aspect to the 103rd aspect, relates to a handle (20) for a device (1) adapted to execute maintenance operations in a land or garden, in which said gripping portion (21) comprises a first lateral rod (25) and a second lateral rod (26), said first lateral rod (25) and said second lateral rod (26) being extendable, so as to define said proximal position and said distal position of said adjustment portion (24), along respective substantially straight and optionally parallel trajectories, said gripping portion (21) further comprising at least a first transverse rod interposed in connection between the first lateral rod (25) and the second lateral rod (26).

A 105th aspect of the invention, dependent on the 104th aspect, relates to a handle (20) for a device (1) adapted to execute maintenance operations in a land or garden, in which said first lateral rod (25) and said second lateral rod (26) respectively comprise a respective first element and a respective second element, said first element being in sliding coupling with said second element.

A 106th aspect of the invention, dependent on the 104th aspect to the 105th aspect, relates to a handle (20) for a device (1) adapted to execute maintenance operations in a land or garden, in which said first element is in telescopic coupling with said second element so that said distal position of said adjustment portion (24) is defined by a minimum penetration of said first element in said second element and said proximal position of said adjustment portion (24) is defined by a maximum penetration of said first element in said second element.

A 107th aspect of the invention, dependent on any one of the aspects from the 104th aspect to the 106th aspect, is related to a handle (20) for a device (1) adapted to execute maintenance operations in a land or garden, in which said first transverse rod extends seamlessly between said first/second element of said first lateral rod (25) and said first/second element of said second lateral rod (26) to compose said adjustment portion (24).

A 108th aspect of the invention, dependent on any one of the aspects from the 104th aspect to the 107th aspect, relates to a handle (20) for a device (1) adapted to execute maintenance operations in a land or garden, in which at least one of the first lateral rod (25) and the second lateral rod (26) comprises:
- a locking system configured to lock the adjustment portion (24) selectively in the distal position and/or in the proximal position and/or optionally in one or more intermediate positions interposed between the proximal position and the distal position and
- a release system configured to inhibit said locking system, for example so as to allow the user to execute a switching of the position of said adjustment portion (24).

A 109th aspect of the invention, dependent on the 108th aspect, relates to a handle (20) for a device (1) adapted to execute maintenance operations in a land or garden, in which said locking system comprises a plurality of notches applied to said first element and at least one dentil applied to said second element, said dentil being housable in one of said notches.

A 110th aspect of the invention, dependent on the 108th aspect or the 109th aspect, relates to a handle (20) for a device (1) adapted to execute maintenance operations in a land or garden, in which said release system comprises a button or a lever notably in operating connection with said dentil so as to separate said dentil from said notches.

A 111th aspect of the invention, dependent on any one of the aspects from the 108th aspect to the 110th aspect, is related to a handle (20) for a device (1) adapted to execute maintenance operations in a land or garden, in which both the first lateral rod (25) and the second lateral rod (26) comprise a respective locking system and in which said release system is shared between said first lateral rod (25) and said second lateral rod (26).

A 112th aspect of the invention, dependent on the 111th aspect, relates to a handle (20) for a device (1) adapted to execute maintenance operations in a land or garden, in which said button or said lever is arranged at a second transverse rod of said gripping portion (21), said second transverse rod belonging to said base portion (23).

A 113th aspect of the invention, dependent on any one of the aspects from the 95th aspect to the 112th aspect, relates to a handle (20) for a device (1) adapted to execute maintenance operations in a land or garden, in which said gripping portion (21) is rotatably movable around the constraining portion (22), said handle (20) comprising a joint (27) configured to allow a rotation of the gripping portion (21) around a registration axis (M).

A 114th aspect of the invention, dependent on the 113th aspect, relates to a handle (20) for a device (1) adapted to execute maintenance operations in a land or garden, in which said registration axis (M) is fixed with respect to the constraining portion (22).

A 115th aspect of the invention, dependent on the 113th aspect to the 114th aspect, relates to a handle (20) for a device (1) adapted to execute maintenance operations in a land or garden, in which said base portion (23) comprises said joint (27).

A 116th aspect of the invention, dependent on any one of the aspects from the 95th aspect to the 115th aspect, relates to a handle (20) for a device (1) adapted to execute maintenance operations in a land or garden, in which said handle (20) defines a peripheral outline having a substantially polygonal shape, in particular rectangular or square.

A 117th aspect of the invention, dependent on the 116th aspect, relates to a handle (20) for a device (1) adapted to execute maintenance operations in a land or garden, in which said peripheral outline is variable in extension during a passage of the adjustment portion (24) from the proximal position to the distal position and vice versa.

A 118th aspect of the invention relates to a device (1) for executing maintenance operations in a land or garden, in particular suitable for use as a brush cutter and/or as a turf trimmer and/or as a hedge trimmer, said device (1) comprising:
- a stem (2) constrained to the constraining portion (22) of said handle (20) and extending in length between a first end portion and a second end portion;
- a work head (10) configured to execute maintenance operations, said work head (10) being applied to said stem (2) at the first end portion,
- at least one handle (20) according to any one of the aspects from the 61st aspect to the 117th aspect, said handle (20) being applied to said stem (2) at the second end portion or at a portion of said stem (2) interposed between the first end portion and the second end portion, in which said handle (20) is constrained to said stem (2) by means of said constraining portion (22).

A 119th aspect of the present invention, dependent on the 118th aspect, relates to a device (1) for executing maintenance operations in a land or garden, in which the orientation of said work head (10) with respect to said handle (20) is such that said work head (10) is substantially parallel to the ground as long as said first gripping section (41) is substantially parallel to the ground and whereby said work head (10) is substantially orthogonal to the ground as long as said third gripping section (43) is substantially parallel to the ground. A 120th aspect of the present invention, dependent on the 118th aspect or the 119th aspect, relates to a device (1) for executing maintenance operations in a land or garden, in which the arrangement, in particular position and/or orientation, of said handle (20) with respect to said stem (2) is switchable at least between a first arrangement, in particular first position and/or first orientation, and a second arrangement, in particular second position and/or second orientation.

A 121st aspect of the present invention, dependent on the 120th aspect, relates to a device (1) for executing maintenance operations in a land or garden, in which said handle (20) is operatively connected to said work head (10) and is further configured to act as a selector member of said work head (10).

A 122nd aspect of the present invention, dependent on the 121st aspect, relates to a device (1) for executing maintenance operations in a land or garden, in which a switching in the arrangement of said handle (20) from said first arrangement to said second arrangement determines a simultaneous switching of the orientation of said work head (10) from said first orientation to said second orientation.

A 123rd aspect of the present invention, dependent on the 121st aspect or the 122nd aspect, relates to a device (1) for executing maintenance operations in a land or garden, in which a switching in the arrangement of said handle (20) from said second arrangement to said first arrangement determines a simultaneous switching of the orientation of said work head (10) from said second orientation to said first orientation.

### BRIEF DESCRIPTION OF THE DRAWINGS

Some embodiments and aspects of the invention will be described hereinafter with reference to the accompanying drawing tables, given merely for indicative/exemplary/explanatory non-limiting purposes, in which:
- Figure 1 is a perspective view of a device 1 according to the present invention comprising a turf-trimming head;
- Figure 2 is a perspective view of a device 1 according to a further embodiment of the present invention comprising a turf-trimming head;
- Figure 3 is a perspective view of a device 1 according to the present invention comprising a pruning blade;
- Figures 4 and 5 are lateral sectional views of a device 1 according to the present invention depicting the transmission system between the handle and the work head;
- Figures 6 and 7 are lateral sectional views of a device 1 according to the present invention depicting a further embodiment of a transmission system between the handle and the work head;
- Figure 8a is a lateral view of a device according to the present invention in a parking configuration;
- Figures 8b and d 8c are lateral views of a device according to the present invention each depicting a working condition of the movable device;
- Figures 9a and 9b are perspective views of an extendable handle of the device respectively in a distal position and in a proximal position;
- Figures 10a and 10b are sectional views of figures 9a and 9b;
- Figure 11 is a perspective view of a further embodiment of a handle of a device;
- Figure 12a is a front view of said further embodiment of the handle according to a plane orthogonal to the axis of the stem;
- Figure 12b is a lateral view of said further embodiment of the handle according to a plane parallel to the axis of the stem;
- Figure 12c is a top view of said further embodiment of the handle according to a plane rotated by 90° around the axis of the stem with respect to the plane of figure 12b.

It should be noted that in the present detailed description, corresponding parts illustrated in the various figures are indicated with the same numerical references. The figures could illustrate the object of the invention through non--scale depictions so that the parts and components illustrated in the figures related to the object of the invention could exclusively relate to schematic depictions.

### DETAILED DESCRIPTION

### Device usable as a brush cutter and/or turf trimmer and/or hedge trimmer

A land maintenance device, for example a cutting device for mowing the turfgrass of a land or a hedge-trimming device, is indicated overall by the reference number 1. Such a device 1 is preferably suitable for carrying out the function of brush cutter and/or the function of turf trimmer and/or the function of hedge trimmer. However, the device 1 can be a different land maintenance device, for example a lawnmower device according to air cushion technology. Devices configured to execute scans and/or inspections of land can also be considered land maintenance devices for the purposes of the present invention. Therefore, the device 1 can also be a metal-detector device.

The present device is a portable device, in particular in which an operator, during land maintenance operations, carries the device by hand or with the aid of a shoulder strap. Therefore, during a working condition, the device 1 is entirely supported in weight by the operator, without said device resting on the ground. The weight of the device of the present invention must therefore be congruent with a weight which can be carried by the operator as easily as possible. In this regard, the device 1 of the present invention has a total weight comprised between 1 kg and 8 kg, preferably between 4 kg and 6 kg.

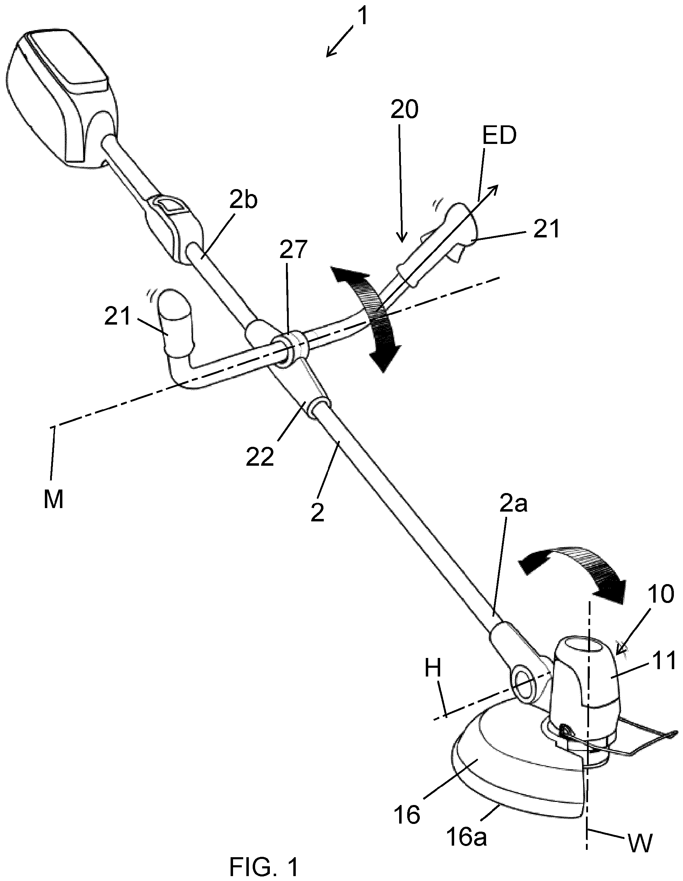

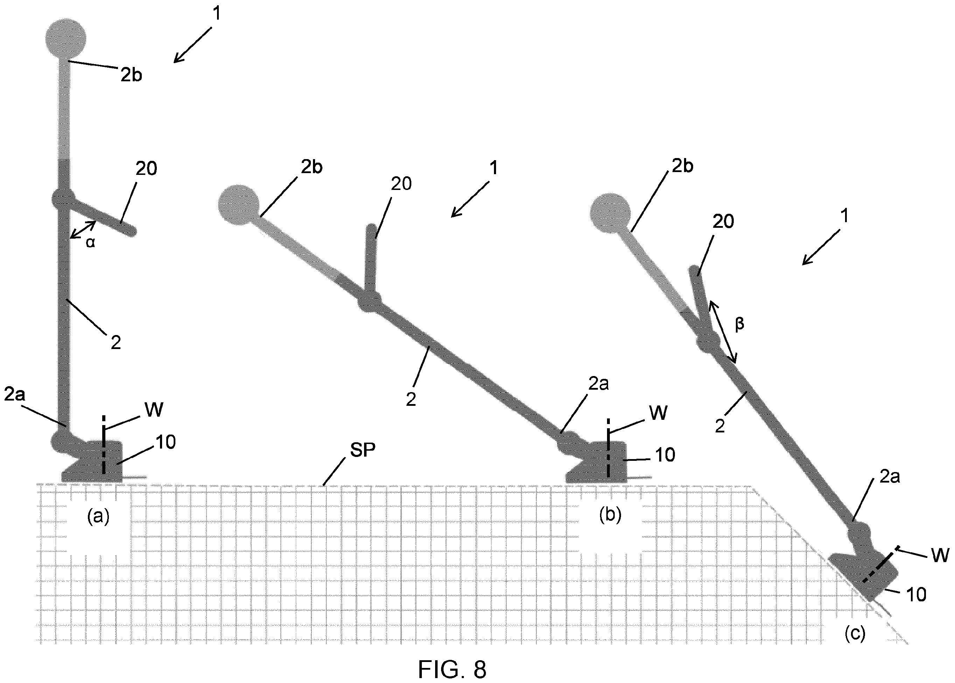

In accordance with the present invention, the device is schematically shown in the accompanying figures 1-3 and, during a rest condition thereof and during two possible conditions of use, in figures 8a-8c.

The device 1 comprises a stem 2 extending in length between a first end portion 2a and a second end portion 2b along a longitudinal direction. The stem 2 can in fact define a rod extending substantially straight between the first end portion 2a and the second end portion 2b. During a condition of use of the device 1 in which the latter is a lawnmower, the first end portion can define the bottom portion of the device, i.e., the end portion of the stem 2 closest to the ground with respect to the second end portion.

The stem can have a substantially circular sectional shape, to define a stem having a cylindrical shape. In particular, the stem can have an outer diameter comprised between 10 mm and 60 mm, in particular between 20 mm and 50 mm.

Alternatively, the stem 2 can have an elliptical or polygonal sectional shape, for example a square or rectangular section. The stem 2 can be made of metallic material, for example aluminium or steel, or it can be made of plastic or composite material.

The stem 2 can extend longitudinally between the first end portion and the second end portion for a length comprised between 1000 mm and 1500 mm, preferably between 1050 mm and 1200 mm.

The device 1 comprises a work head 10 configured to execute land maintenance operations. The work head 10 is preferably applied to the stem 2 at the first end portion 2a.

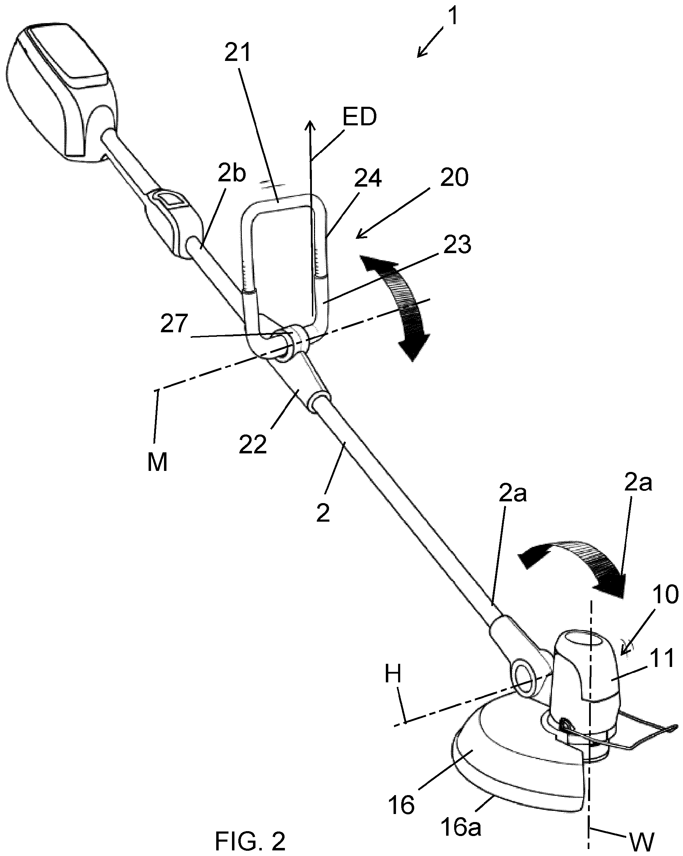

The work head 10 is configured to execute vegetation cutting operations, e.g., turfgrass cutting operations or plant pruning operations, e.g., trimming a hedge. Preferably, the work head 10 comprises a cutting head. In an embodiment, the work head 10 comprises a turf-trimming or lawnmower head 11, of the type shown in figures 1 and 2, comprising at least one blade or at least one cutting wire, for example a Nylon wire, for executing the cutting operations of the turfgrass. The turf-trimming or lawnmower head 11 comprises a rotary shaft movable by rotation around a rotation axis W, in which the rotation shaft carries the blades or cutting wire of the work head. The rotation speed of the shaft during an operating condition of the device can be comprised between 4000 rpm and 7000 rpm.

It should be noted that, during a condition of use of the device 1, the rotation axis W of the shaft of the turf-trimming or lawnmower head 11 is substantially orthogonal to the ground.

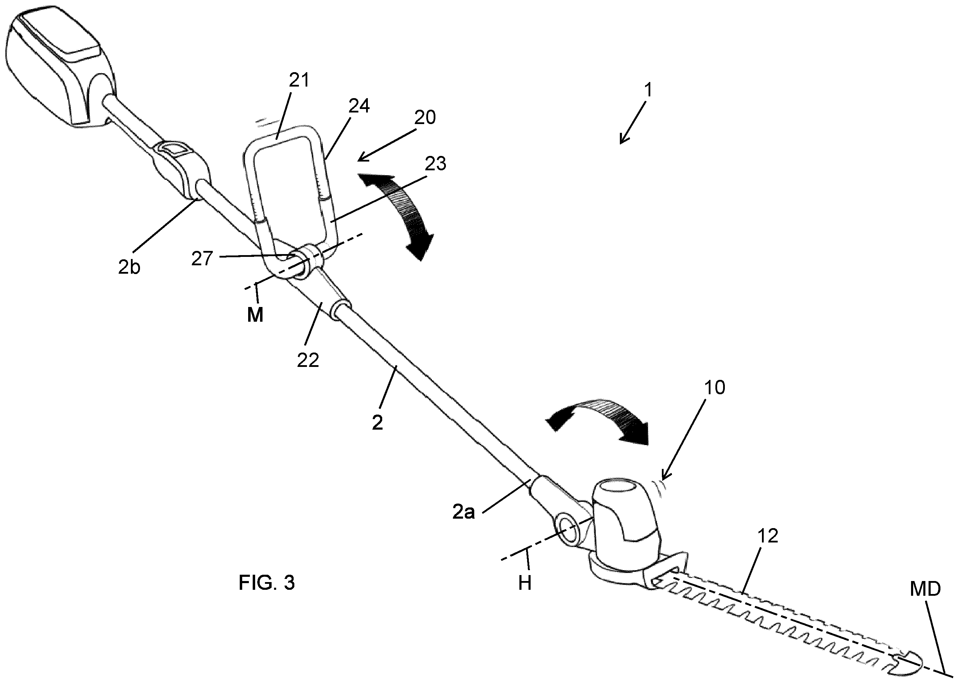

Alternatively to the turf-trimming or lawnmower head 11, the work head 10 can comprise a pruning blade 12, shown in figure 3, extending in length along a main direction MD, the pruning blade being able to be a hedge-trimmer blade. The pruning blade can comprise an upper blade and a lower blade, facing each other and in contact along respective contact surfaces, the contact surfaces being movable therebetween along the main direction MD. The pruning blade 12 can extend along the main direction MD for a length comprised between 400 mm and 750 mm. The pruning blade 12 can comprise a toothing with a pitch determined as a function of the thickness of the branches to be cut. A suitable pitch for the pruning blade 12, given merely by way of example, is 30 mm. The pruning blade 12 can be made of metallic material, for example steel. The work head 10 is movable by rotation with respect to the stem 2 around an adjustment axis H oriented transversely with respect to the longitudinal direction of the stem. In particular, the adjustment axis H can be substantially orthogonal to the longitudinal direction of the stem 2. The adjustment axis H of the work head 10 is substantially located at the first end portion of the stem 2 and defines an attachment portion between the work head 10 and the stem 2. The work head is movable by rotation around the adjustment axis H between a first orientation and a second orientation. In particular, the work head 10 can be movable by rotation around the adjustment axis H by an angular stroke comprised between 30° and 180°, in particular comprised between 45° and 150°, preferably comprised between 80° and 150°, preferably about 90°.

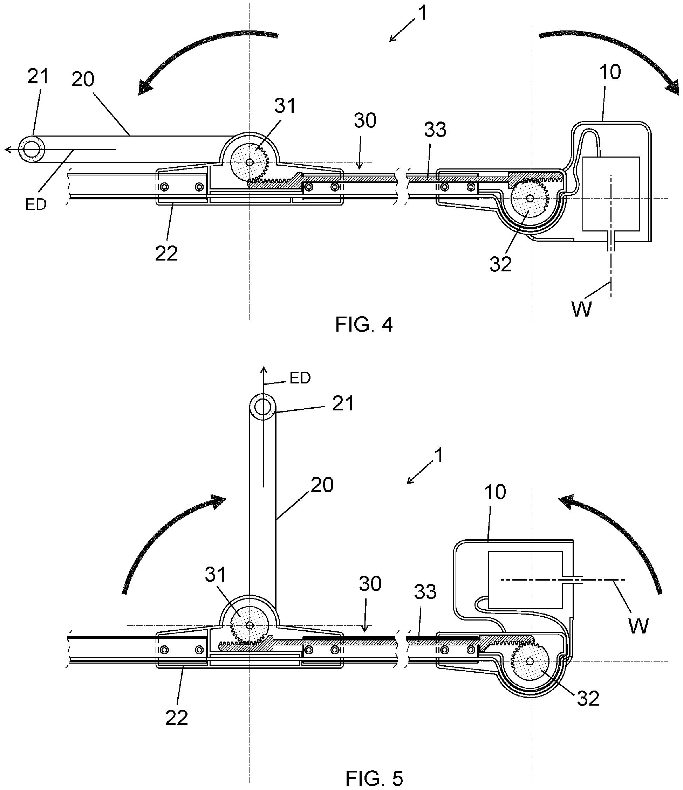

The orientation of the work head 10 with respect to the stem 2 is switchable at least between a first orientation and a second orientation, and is further adjustable in one or more orientations interposed between the first orientation and the second orientation. A graphic depiction of the first orientation and the second orientation is shown in figures 4 and 5, figures 6 and 7, and figures 8a and 8c, respectively. It should be noted that the work head 10 can be movable around the adjustment axis H both if the work head 10 comprises the turf-trimming head 11, and if the work head 10 comprises the pruning head 12.

In an embodiment, the work head 10 can be movable by rotation around the adjustment axis H in a continuous manner. In other words, the work head 10 is positionable in a substantially infinite number of intermediate positions around the adjustment axis H.

Alternatively, the work head 10 can be rotatably movable around the adjustment axis H in a discrete manner. In other words, the work head 10 can be positionable in a plurality of discrete intermediate positions around the adjustment axis H.

In an embodiment, the work head 10 can comprise a motor configured to activate the rotary shaft of the cutting head 11 or the pruning blade 12. The motor is preferably an electric motor, but can alternatively be a combustion engine.

Alternatively, the device 1 can comprise the motor substantially at the second end portion 2b of the stem 2. The motor (electric or combustion) is connected to the work head 10 by means of a transmission system. The transmission system can be housed inside the stem 2. For example, the transmission system can envisage a direct coupling between the motor and the work head 10, comprising a rod or a shaft connecting between the motor and the work head 10. Alternatively, an indirect coupling can be envisaged between the motor and the work head 10, for example by means of toothed wheels, chains or belts. The motor can have a nominal power comprised between 500 Watts and 3500 Watts.

Furthermore, the device can comprise an electric battery operatively connected to the electric motor and configured to power said motor to activate the work head. The battery can be housed at or near the second end portion 2b of the stem 2. Advantageously, the device according to the present invention can implement the teachings of European patent application 22185954.9 in the name of the same Applicant.

The device further comprises a handle 20 configured to allow the gripping of the device 1 by an operator during maintenance operations. The handle is shown, in accordance with various embodiments, in figures 1, 2, 9, 10, 11, and 12. The handle can be mounted on the stem 2 at the second end portion 2b or at a portion of the stem 2 interposed between the first end portion 2a and the second end portion 2b. The handle 20 is preferably arranged closer to the second end portion than to the first end portion 2a of the stem 2. Alternatively, the handle can be in a zone which is substantially equidistant from the first end portion and the second end portion of the stem 2.

In an embodiment, the handle 20 has a distance from the work head 10, measured along the stem 2, greater than 200 mm, in particular greater than 300 mm, more in particular between 300 mm and 1500 mm, even more in particular between 600 mm and 1200 mm.

The handle 20 comprises at least one gripping portion 21 configured to be grasped by the operator, said gripping portion 21 being spaced with respect to the stem 2 to allow gripping by an operator.

The handle 20 according to the present invention is configured to allow the operator to make adjustments in the arrangement of the handle 20 relative to the structural element to which the handle 20 is applied, i.e., to the stem 2. In this regard, it should be specified how the claimed term "arrangement", referring to the handle 20, can include both the position of the handle 2, i.e., the placement of the handle 20 along the stem 2, and the orientation of the handle 2, i.e., the inclination of the handle 20 with respect to the longitudinal direction defined by the stem 2. Therefore, an adjustment in the arrangement of the handle 20 can be implemented by means of a rotation of the handle 20 with respect to the stem 2, since a rotation of the handle 20 is capable of varying the orientation of the handle 20, i.e., the inclination of the handle 20 with respect to the longitudinal direction defined by the stem 2. Alternatively, an adjustment in the arrangement of the handle 20 can be implemented by means of a translation of the handle 20 along the stem 2 or transversely to the stem 2, since a translation of the handle 20 is capable of varying the position of the handle 20, i.e., the placement of the handle 20 along the stem 2. Alternatively, an adjustment in the arrangement of the handle 20 can be implemented by means of a rototranslation of the handle 20, i.e., by a movement of the handle 20 which combines a rotation with respect to the stem 2 and a translation of the handle 20 (in particular along the stem 2), since a rototranslation of the handle 20 is capable of varying both the orientation of the handle 20 and the position of the handle 20.

The handle 20 can be movable between a first arrangement and a second arrangement, in particular by rotation and/or by translation. The accompanying figures show an embodiment in which the handle 20 is movable between the first arrangement and the second arrangement by rotation around a drive axis M. The drive axis M is substantially fixed with respect to the stem, at least during a condition of use of the device. In particular the drive axis M of the handle remains fixed with respect to the stem 2 during a switching from the first arrangement to the second arrangement and vice versa. The drive axis M is transverse, and preferably orthogonal, to the longitudinal direction of the stem 2.

In the embodiment of the present invention to be understood as preferred, since it offers the possibility of maximally fine and precise adjustments in the configuration of the device 1, the handle 20 is rotatably movable between the first arrangement and the second arrangement in a continuous manner. Therefore, the handle 20 can be placed in an ideally infinite number of intermediate arrangements, in particular intermediate positions and/or intermediate orientations, between the first arrangement and the second arrangement. A movement of the handle 20 which occurs continuously between the first arrangement and the second arrangement determines a simultaneous movement of the work head 10 which advantageously also occurs continuously between the first orientation and the second orientation. In fact, in the preferred embodiment of the invention, the work head 10 is advantageously movable by rotation between the first orientation and the second orientation in a continuous manner, thus being orientable in an ideally infinite number of intermediate orientations between the first orientation and the second orientation.

In a further embodiment of the present invention, the handle 20 is rotatably movable between the first arrangement and the second arrangement in a discrete manner. Therefore, the handle 20 can be placed in a plurality of intermediate arrangements, in particular intermediate positions and/or intermediate orientations, between the first arrangement and the second arrangement. A movement of the handle 20 which occurs in a discrete manner between the first arrangement and the second arrangement determines a simultaneous movement of the work head 10 which advantageously also occurs in a discrete manner between the first orientation and the second orientation. In fact, in the further preferred embodiment of the invention, the work head 10 is advantageously rotatably movable between the first orientation and the second orientation in a discrete manner, the number of the intermediate orientations of the work head 10 thus being orientable according to a plurality of intermediate orientations between the first orientation and the second orientation, profitably corresponding to the number of the intermediate arrangements of the handle 20.

If the handle is movable between the first arrangement and the second arrangement by rotation around the drive axis M, the handle 20 is movable by rotation by an angular stroke comprised between 30° and 180°, in particular comprised between 45° and 150°, preferably comprised between 80° and 150°, preferably about 90°.

It should be noted that, in an embodiment, the work head 10 and the handle 20 are rotatably movable around respective drive axes substantially parallel to each other. In other words, the adjustment axis H of the work head 10 and the drive axis M of the handle can be parallel to each other and preferably both orthogonal to the longitudinal direction of the stem 2.

In an alternative embodiment, not shown in the accompanying figures, the handle 20 comprises a knob rotatable around a respective drive axis between the first arrangement and the second arrangement. The knob extends in length along said drive axis. In particular, the knob can have a substantially cylindrical shape. In such an embodiment, a rotation of the knob determines the passage between the first arrangement and the second arrangement. The knob is preferably arranged at a gripping portion 21 of the knob, such that the knob is spaced from the stem 2: in particular the distance between the stem and the knob is greater than 2 cm, in particular comprised between 4 cm and 30 cm. The drive axis of the knob is transverse, and preferably orthogonal, to the longitudinal direction of the stem. It should further be noted that, in the embodiment comprising the knob, the handle can also be rotatably movable around a rotation axis with respect to the stem, such that the gripping portion 21 of the handle is rotatably movable around said rotation axis.

The handle 20 extends in length away from the stem 2 along an extension direction ED. In particular, the handle can extend in length transversely to the drive axis M thereof along the extension direction ED, as shown in figures 1, 2, 4 and 5. In particular, the extension direction ED determines the distance between the gripping portion 21 of the handle and the stem 2. Further specific embodiments of the handle 20 are described in the following dedicated section.

The device 1 can comprise a locking system of the handle 20 which is configured to keep the handle 20 in a desired position between the first arrangement and the second arrangement during maintenance operations. In particular, the locking system can be configured to keep the handle 20 in a desired position chosen among a plurality, or among an infinite number, of arrangements between the first arrangement and the second arrangement during maintenance operations.

The locking system can be configured in a locked configuration, in which the movement of the handle 20 is prohibited, and an unlocked configuration, in which the movement of the handle is allowed. The transition from the locked position to the unlocked position is determined by an unlocking element preferably arranged at or near the handle. The unlocking element can comprise a key drivable by the operator and configured to deactivate the locking system and consequently allow the movement of the handle between the first arrangement and the second arrangement.

To avoid being a nuisance for grasping the handle 20, the locking system can be placed along the stem laterally or behind with respect to the handle 20.

The device 1 can comprise, additionally or alternatively to the locking system of the handle 20, a locking system of the work head 10 which is configured to keep the work head 10 in a desired position between the first orientation and the second orientation during maintenance operations. In particular, the locking system of the work head 10 can be configured to keep the work head 10 in a desired position chosen among a plurality, or among an infinite number, of orientations between the first orientation and the second orientation during maintenance operations.

In an embodiment, the device comprises both the handle locking system and the work head locking system. In such an embodiment, the unlocking element can be simultaneously active on both the locking system of the handle 20 and the locking system of the work head 10.

In an embodiment, the handle 20 is operatively connected to the work head 10 and is configured to act as a selector member of the work head 10. A switching in the arrangement of the handle 20 from the first arrangement to the second arrangement determines a simultaneous switching of the orientation of the work head 10 from the first orientation to the second orientation. Similarly, a switching in the arrangement of the handle 20 from the second arrangement to the first arrangement determines a simultaneous switching of the orientation of the work head 10 from the second orientation to the first orientation.

In other words, a movement of the handle 20, in rotation and/or translation, between the first arrangement and the second arrangement determines a movement, substantially simultaneous, of the work head 10 between the first orientation and the second orientation. More specifically, a movement of the handle 20, in rotation and/or in translation, between the first arrangement and the second arrangement determines a rotation of the work head 10 around the adjustment axis H thereof.

In the embodiment in which the handle comprises the rotatable knob, a rotation of the knob around the drive axis determines the switching of the orientation of the work head 10 from the first orientation to the second orientation and vice versa.

In more general terms, the present invention allows the operator to execute an adjustment in the orientation of the work head 10, driving an adjustment in the arrangement of the handle 20. Therefore, an adjustment in the orientation of the work head 10 can be obtained by means of an adjustment in the orientation of the handle 20, i.e., by means of a rotation of the handle 20 with respect to the stem 2. For example, a rotation of the handle 20 in a clockwise direction (whereby the gripping portion 21 of the handle 20 tends to approach the work head 10) can determine an adjustment of the orientation of the work head 10 in the form of a rotation of the work head 10 in a counter-clockwise direction. As a further example, a rotation of the handle 20 in a clockwise direction (whereby the gripping portion 21 of the handle 20 tends to approach the work head 10) can determine an adjustment of the orientation of the work head 10 in the form of a rotation of the work head 10 in a clockwise direction. As a further example, a rotation of the handle 20 in a counter-clockwise direction (whereby the gripping portion 21 of the handle 20 tends to move away from the work head 10) can determine an adjustment of the orientation of the work head 10 in the form of a rotation of the work head 10 in a clockwise direction. As a further example, a rotation of the handle 20 in a counter-clockwise direction (whereby the gripping portion 21 of the handle 20 tends to move away from the work head 10) can determine an adjustment of the orientation of the work head 10 in the form of a rotation of the work head 10 in a counter-clockwise direction. As a further example, a translation of the handle 20 towards the work head 10 can determine an adjustment of the orientation of the work head 10 in the form of a counter-clockwise rotation of the work head 10. As a further example, a translation of the handle 20 towards the work head 10 can determine an adjustment of the orientation of the work head 10 in the form of a clockwise rotation of the work head 10. As a further example, a translation of the handle 20 away from the work head 10 can determine an adjustment of the orientation of the work head 10 in the form of a clockwise rotation of the work head 10. As a further example, a translation of the handle 20 away from the work head 10 can determine an adjustment of the orientation of the work head 10 in the form of a counter-clockwise rotation of the work head 10. The feature whereby the handle 20 is operatively connected to the work head 10 allows the operator to change the inclination of the work head at will during a condition of use of the device, in a simple and quick manner, and potentially without having to detach his hands from the handle 20.

The operator is thus allowed to immediately adapt the orientation of the work head 10 to a change in the slope of the ground, by means of an easy adjustment action exerted on the handle 20. In this regard, comparing figures 8b (representative of a maintenance operation executed on a flat ground) and 8c (representative instead of a maintenance operation executed on a slope), it is clear that the present invention (especially in the preferred embodiment in which adjustments can be executed continuously) ensures that the work head 10 can be arranged parallel to the ground, while maintaining a comfortable, ergonomic and safe grip of the device 1. The operator is further allowed to immediately adapt the orientation of the work head 10 to a variation in the use of the device 1, in particular from a use as a brush cutter or turf trimmer (for which the work head 10 is typically arranged parallel to the ground) to a use as a hedge trimmer (for which the work head 10 is typically arranged orthogonally to the ground) or vice versa, always maintaining a comfortable, ergonomic and safe grip of the device 1.

As shown in figures 8a-8c, in order to ensure constant ergonomics in the gripping of the device 1, the work head 10 is advantageously counter-rotating with respect to a rotation of the handle 20. In particular, the work head 10 is rotatably movable in a first direction, while the handle 20 is rotatably movable in a second direction opposite the first direction. Consequently, a clockwise rotation of the handle 20 determines a counter-clockwise rotation of the work head 10 and vice versa. This peculiarity facilitates the use of the device 1 by the operator, in particular when the device is used on land characterized by slopes and/or reliefs.

Although embodiments according to which a rotation of the handle 20 in a first direction determines a rotation of the work head 10 in a second direction opposite the first can be considered preferable for superior ergonomics and/or superior convenience of use, the present invention is by no means to be limited in this regard, embodiments according to which a rotation of the handle 20 determines a rotation of the work head 10 in the same direction can alternatively be envisaged.

In the embodiment in which the handle is movable between the first arrangement and the second arrangement in a continuous manner and in which the work head is rotatably movable around the adjustment axis between the first orientation and the second orientation in a continuous manner, a movement of the handle in a continuous manner determines a simultaneous movement of the work head in a continuous manner, this allowing the work head to be positioned in any position interposed between the first orientation and the second orientation.

Alternatively, in the embodiment in which the handle is movable between the first arrangement and the second arrangement in a discrete manner, a movement of the handle in a discrete manner determines a simultaneous movement of the work head in a discrete manner between a plurality of orientations between the first orientation and the second orientation.

The handle 20 can be operatively connected to the work head by means of mechanical connection. For example, the device 1 can comprise a drive system 30 placed in connection between the handle 20 and the work head 10, as shown in the accompanying figures 4 to 7. The drive system 30 is thus configured to transfer a movement of the handle 20 to the work head 10.

The drive system 30 can comprise at least one or more traction cables configured to withstand only traction stresses. For example, the drive system can comprise a first cable configured to determine the passage of the work head from the first orientation to the second orientation in response to a movement of the handle 20 from the first arrangement to the second arrangement. Furthermore, the drive system can comprise a second cable configured to determine the passage of the work head from the second orientation to the first orientation in response to a movement of the handle 20 from the second arrangement to the first arrangement.

Alternatively, the drive system 30 can comprise one and only one traction cable and at least one elastic return element connected to the work head 10 and such a traction cable can be configured to withstand substantially only traction stresses. In such a case, the first cable can be configured to determine the passage of the work head from the first orientation to the second orientation in response to a movement of the handle 20 from the first arrangement to the second arrangement, or vice versa. At the same time, the elastic element is configured to determine the passage of the work head from the second orientation to the first orientation in response to a movement of the handle 20 from the second arrangement to the first arrangement, or vice versa.

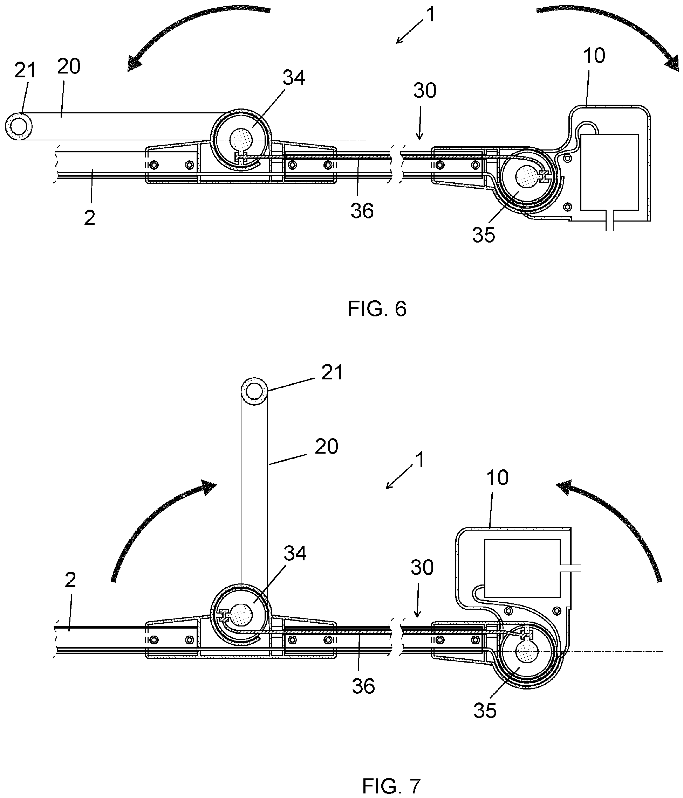

Alternatively, the drive system 30 can comprise a flexible rod or cable transmission, in which the flexible rod or cable is configured to withstand traction and compression stresses, such an embodiment being shown in figures 6 and 7. Such a transmission comprises a first pulley 34 integral with the handle 20, a second pulley 35 integral with the work head 10, and a flexible rod or a cable 36 interposed in connection between the first pulley and the second pulley. In this embodiment, a traction of the cable or rod determines the passage of the work head from the first orientation to the second orientation in response to a movement of the handle 20 from the first arrangement to the second arrangement, or vice versa. Similarly, a compression of the cable or rod determines the passage of the work head from the second orientation to the first orientation in response to a movement of the handle 20 from the second arrangement to the first arrangement, or vice versa.

It is noted in particular in figures 6 and 7 that the flexible rod or cable is constrained to both the handle 20 and the work head 10, envisaging an eccentricity, whereby (based on the depiction in figures 6 and 7) a rotation of the handle 20 in a clockwise direction is capable of generating a traction force capable of pulling the flexible rod or cable and consequently rotating the work head 10 in a counter-clockwise direction, while a rotation of the handle 20 in a counter-clockwise direction is capable of generating a compression force capable of pushing the flexible rod or cable and consequently rotating the work head 10 in a clockwise direction.

Alternatively, the drive system 30 can comprise a belt or chain transmission, not shown in the accompanying figures, interposed in connection between the work head 10 and the handle 20. Such a belt or chain transmission can comprise a first toothed wheel integral with the handle 20, a second toothed wheel integral with the work head 10, and a chain or belt wound around the first toothed wheel and the second toothed wheel.

Alternatively, the drive system 30 can comprise a rigid transmission bar configured to withstand traction and compression stresses. The bar can be rigidly interposed in connection between the work head 10 and the handle 20.

Alternatively, the drive system 30 can comprise a rack transmission, shown in figures 4 and 5, comprising a first toothed wheel 31 integral with the handle 20 and advantageously coaxial with the handle 20, a second toothed wheel 32 integral with the work head 10 and advantageously coaxial with the work head 10, and a bar 33 interposed between the first toothed wheel 31 and the second toothed wheel 32. The bar 33 comprises a rack toothing engaged with the first toothed wheel 31 and the second toothed wheel 32. It should be noted that both toothed wheels 31 and 32 can have, instead of a toothing extending along the entire peripheral profile, a respective toothing along a limited section of the peripheral profile, in particular a circumferential arc toothing. The bar 33 extends in length between a first end and a second end, in which the first end comprises a first toothing engaged with the first toothed wheel 31 (i.e., the toothed wheel associated with the handle 20) and in which the second end comprises a second toothing engaged with the second toothed wheel 32 (i.e., the toothed wheel associated with the work head 10). Thereby, a rotation of the handle 20 around the drive axis thereof determines a translational motion of the toothed bar 33, which in turn determines a rotation of the second toothed wheel 32 and therefore of the work head 10.

The above-mentioned drive systems can be integrated inside the stem 2, as shown in figures 4-7. In such a case, the stem 2 is internally hollow to define an internal volume for the housing of the transmission system 30.

Although the housing of the drive system 30 inside the shaft 2 is to be preferred since the devices of which the drive system 30 is composed do not interfere with the hands and arms of the operator and have a significantly lower susceptibility to damage and wear, the present invention is not in any case to be understood as limited in this regard, since at least some of the devices of which the drive system 30 is composed can alternatively be arranged outside the shaft 2.

In an alternative embodiment, the device 1 comprises an electrical transmission system 30 comprising an electric actuator operatively connected to the work head 10 and configured to move the work head 10 between the first orientation and the second orientation. The actuator can be electrical (e.g., an electric motor), pneumatic, mechanical (e.g., spring-loaded), hydraulic or still another type. In particular, a movement of the handle 20 between the first arrangement and the second arrangement electrically commands the actuator to move the work head 10. In particular, the electric drive system 30 comprises a position detector operatively connected to the handle 20 and configured to detect an arrangement of the handle 20 between the first arrangement and the second arrangement. The position detector can comprise an angular detector of the angular position of the handle 20. The electric drive system 30 further comprises a control unit operatively connected to the actuator of the work head 10 and the position detector of the handle 20.

The control unit can be a single unit or be formed by a plurality of different control units depending on the design choices and operational needs. The control unit can be an electronic type component which can comprise at least one among a digital processor (CPU), an analogue type circuit, or a combination of one or more digital processors with one or more analogue type circuits. Such a control unit is programmed so as to execute at least one control program for adjusting the orientation of the work head 10 starting from the detection of the arrangement of the handle 20.

The control unit is thus configured to detect an arrangement of the handle 20 between the first arrangement and the second arrangement based on a signal emitted by the position detector and, as a function of the detected arrangement of the handle 20, generate a control signal of the actuator of the work head 10 to move the work head 10 in a respective orientation between the first orientation and the second orientation. In particular, the detector is configured to detect any arrangement of the handle 20, in particular any angular position of the handle 20, interposed between the first arrangement and the second arrangement. Similarly, the actuator (e.g., an electric motor) is configured to command the work head 10 into position in any orientation interposed between the first orientation and the second orientation, as a function of the position of the handle 20 detected by the position detector.

Conventionally, the first arrangement of the handle 20 determines the first orientation of the work head 10, while the second arrangement of the handle 20 determines the second orientation of the work head 10. An arrangement of the handle 20 which can be considered as a first arrangement according to the appended claims and an orientation of the work head 10 which can be considered as a first orientation according to the appended claims are schematically shown in figure 8a. An arrangement of the handle 20 which can be considered as a second arrangement according to the appended claims and an orientation of the work head 10 which can be considered as a second orientation according to the appended claims are instead schematically shown in figure 8c. Figure 8b therefore shows an arrangement of the handle and an orientation of the work head which can be considered as intermediates between the aforesaid arrangements and orientations.

In greater detail, in the first arrangement of the handle 20, the extension direction ED can define, with a portion of the stem 2 interposed between the handle 20 and the first end portion 2a of the stem 2, an angle α comprised between 20° and 90°, in particular between 45° and 70°.

In the first orientation of the work head 10, corresponding to the first arrangement of the handle 20, the rotation axis W of the rotary shaft of the cutting head 11 defines with the longitudinal direction of the stem 2 an angle comprised between 0° and 30°, in particular between 0° and 20°. Preferably, in the first orientation of the work head 10, the rotation axis W of the rotary shaft of the cutting head 11 is substantially parallel to the longitudinal direction of the stem 2. At the same time as the longitudinal direction of the stem 2 can be substantially orthogonal to the ground, the first arrangement of the handle 20, as well as the first orientation of the work head 10, shown in figure 8a, coincide with the arrangement of the handle 20 and with the orientation of the work head 10 which allow the device 1 to assume the parking configuration.

In the case in which the work head 10 instead comprises the pruning blade 12, the latter, when arranged in the first orientation, has the main direction MD thereof inclined with respect to the stem by an angle comprised between 75° and 100°, in particular between 80° and 95°, in particular substantially equal to 90°.

Instead in the second arrangement of the handle 20, the extension direction ED defines, with the portion of the stem 2 interposed between the handle 20 and the first end portion 2a of the stem 2, an angle β comprised between 130° and 180°, in particular between 140° and 165°.

In the second orientation of the work head 10 (referred to in figure 2c), corresponding to the second arrangement of the handle 20, the rotation axis W of the rotary shaft of the cutting head 11 defines with the longitudinal direction of the stem 2 an angle comprised between 75° and 100°, in particular between 80° and 90°. Optionally, the rotation axis W of the rotary shaft of the cutting head 11 can be substantially orthogonal to the longitudinal direction of the stem 2. The second arrangement of the handle 20, as well as the second orientation of the work head 10, shown in figure 8c, coincide with an arrangement of the handle 20 and with an orientation of the work head 10 which allow the device 1 to be comfortably used as a brush cutter or as a turf trimmer at a particularly high slope of the ground or to be comfortably used as a hedge trimmer.

Instead in the case in which the work head 10 comprises the pruning blade 12, the latter, when arranged in the second orientation, has the main direction MD thereof inclined with respect to the stem 2 by an angle comprised between 0° and 30°, in particular between 0° and 20°.

In any intermediate arrangement of the handle 20 between the first arrangement and the second arrangement, the extension direction ED defines with the portion of the stem 2 interposed between the handle 20 and the first end portion 2a of the stem 2, an angle comprised between the aforesaid angle α and the aforesaid angle β. At such an arrangement of the handle 20, the work head 10 is inclined with respect to the longitudinal direction of the stem 2 according to an orientation comprised between the first orientation and the second orientation. Therefore, the rotation axis W of the rotary shaft of the cutting head 11 is incident to the longitudinal direction of the stem 2, the rotation axis W of the rotary shaft of the cutting head 11 and the longitudinal direction of the stem 2 defining notably an acute angle, as for example depicted in figure 8b, from which it can be seen how the intermediate arrangements of the handle 20 between the first arrangement and the second arrangement and the corresponding intermediate orientations of the work head 10 between the first orientation and the second orientation are particularly suitable to allow a use of the device 1 as a brush cutter or as a turf trimmer on flat or gently steeped land.

In an embodiment as shown in figures 8a-8c, a rotation of the handle 20 around the drive axis M which determines an approach of the gripping portion 21 of the handle to the second end portion 2b of the stem 2, determines a respective rotation of the work head 10 away from the second end portion 2b of the stem 2. In other words, such a rotation of the handle 20 determines a respective rotation of the work head 10 around the adjustment axis H thereof to increase an angle interposed between the stem 2 and the rotation axis W of the shaft of the cutting head 11 of the work head 10.

In contrast, a rotation of the handle 20 around the drive axis M which determines a movement of the gripping portion 21 of the handle away from the second end portion 2b of the stem 2, determines a respective rotation of the work head 10 towards the second end portion 2b of the stem 2. In other words, such a rotation of the handle 20 determines a respective rotation of the work head 10 around the adjustment axis H thereof to reduce an angle interposed between the stem 2 and the rotation axis W of the shaft of the cutting head 11 of the work head 10.

The device 1 can be configurable in a parking configuration in which the work head 10 is resting on the ground to define a support plane SP and the stem 2 is in a transverse position, optionally orthogonal, to the ground. Such a parking configuration is schematically depicted in figure 8a, and is adapted to define a stable position of the device so that the latter is capable of maintaining the balance thereof without the aid of additional supports. Such a parking configuration is particularly useful for storing the device 1 during a non-use condition thereof. In other words, in such a parking configuration, the device 1 rests only on the ground to define the aforesaid support plane SP.

In the parking configuration, the work head 10 is arranged in an orientation between the first orientation and the second orientation, or in an orientation which is located between the first orientation and the second orientation. In particular, in the parking configuration, the cutting head 10 is arranged in the first orientation, in which the rotation axis W of the rotary shaft of the cutting head 11 is substantially orthogonal to the support plane SP, in particular orthogonal to the ground. Optionally, in the first orientation of the work head 10, the rotation axis W of the rotary shaft of the cutting head 11 is substantially parallel to the longitudinal direction of the stem 2.

As shown in the accompanying figures 1 and 2, the device 1 can comprise a protective casing 16 for enclosing the cutting head. The protective casing is intended to prevent fragments of grass and/or debris (abruptly accelerated by the impact with the cutting head) from striking the operator during maintenance operations. The protective casing can have a substantially circular shape and can extend radially around the work head 10 with respect to the rotation axis W of the rotary shaft. The protective casing can have a diameter comprised between 200 mm and 600 mm, in particular between 300 mm and 500 mm.

The protective casing 16 exhibits, on the side facing the ground, a support surface 16a, which, when the device is in the parking configuration, defines the support plane of the device 1. The support surface 16a is preferably substantially annular in shape. The protective casing 16 can be made of plastic material, alternatively of metallic material.

Alternatively, in the embodiment comprising the pruning blade 12, the main direction MD of the pruning blade 12 is substantially parallel to the support plane during the parking configuration. In the parking configuration, the main direction MD of the pruning blade can be transverse, and optionally orthogonal, to the longitudinal direction of the stem 2.

### Innovative handle configurations

The present disclosure further relates to some particularly advantageous configurations of a handle for a device adapted to execute maintenance operations in a land or garden, for example a cutting device for mowing the turfgrass of a land or a hedge-trimming device. In particular, handle configurations according to one or more of the configurations object of the present invention can be adopted for the handle 20 mounted on the device 1 disclosed in the previous section, thus amplifying the advantages (in terms of comfort, ergonomics and safety) already achieved with the use of the handle 20 as a selector member of the work head 10. However, such an application is not to be understood by way of limitation, as the handle configurations object of the present invention can also be used for devices for the maintenance of land or gardens which are even quite different from the device 1 referred to in the previous section, or also for devices for the maintenance of land or gardens without an adjustable work head.

The handle 20 according to the present invention can be made in accordance with different embodiments shown in figures 1, 2, 9, 10, 11 and 12.

The handle 20 comprises at least one gripping portion 21 configured to allow an operator to grasp the device 1 by gripping the gripping portion 21.

Furthermore, the handle 20 comprises at least one constraining portion 22 configured to establish a constraint between the gripping portion 21 and a structural component of the device 1.

In the exemplary case in which the device 1 is usable, at least in one configuration thereof, as a brush cutter, the structural component is the stem 2 of the device 1. In the exemplary case in which the device 1 is usable, at least in one configuration thereof, as a turf trimmer, the structural component is the stem 2 of the device 1. In the exemplary case in which the device 1 is usable, at least in one configuration thereof, as a hedge trimmer, the structural component is the stem 2 of the device 1. In the exemplary case in which the device 1 is usable, at least in one configuration thereof, as a lawn mower (in particular according to air cushion technology), the structural component is the stem 2 of the device 1. In the exemplary case in which the device 1 is usable, at least in one configuration thereof, as a metal detector, the structural component is the stem 2 of the device 1.

The constraining portion 22 thus coincides with the portion of the handle 20 interposed between the stem 2 and the gripping portion 21. The constraining portion 22 comprises a seat adapted to receive the stem 2 of the device 1 along the longitudinal direction of the stem 2. The seat of the constraining portion 22 can define a section of shape corresponding to that of the stem 2, for example a section of cylindrical shape adapted to receive the stem 2. The seat of the constraining portion 22 can define a constraining axis substantially coincident with the longitudinal direction of the stem 2 of the device 1.

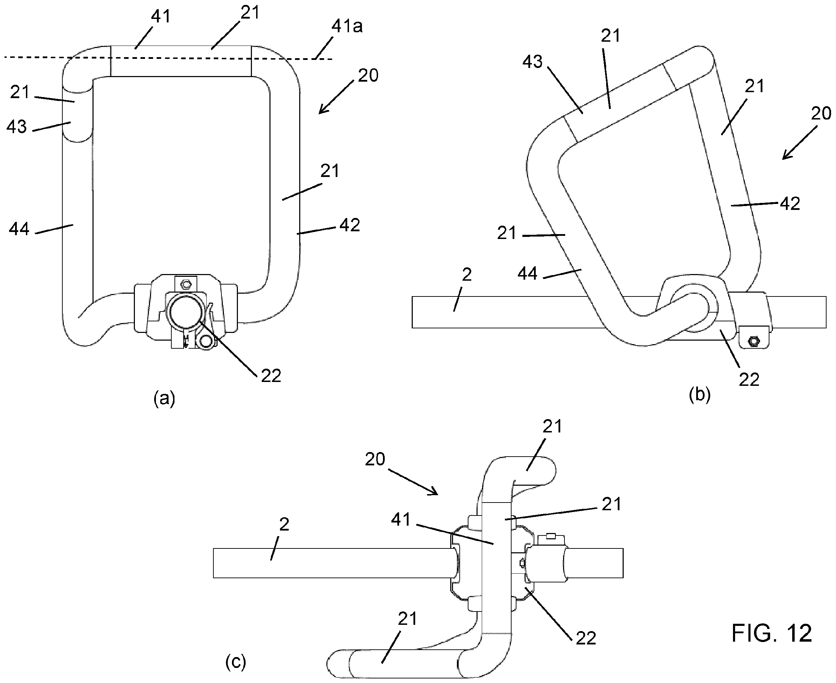

The constraining portion 22 can comprise a closing system to define a locking condition, in which the constraining portion stably joins the handle 20 to the stem, and an unlocked condition, in which the constraining portion allows the removal of the handle 20 from the stem 2 and/or an adjustment of the position of the handle 20 along the stem 2. The locking system can comprise a screw retention system, or can comprise a quick release retention system, as shown in figure 12a.

The constraining portion can be made of metallic or plastic or composite material.

The handle can further comprise a joint 27 configured to allow a rotation of the gripping portion 21 around a registration axis M, said registration axis M also acting as a drive axis when the handle 20 is operatively connected to the work head 21 so as to vary the orientation thereof between the first orientation and the second orientation. In particular, the registration axis M is transverse, and preferably orthogonal, to the constraining axis of the seat of the constraining portion 22. In other words, the registration axis M is transverse, and preferably orthogonal, to the longitudinal axis of the stem 2 when the handle 20 is mounted on the stem 2.

The joint 27 is preferably interposed between the constraining portion 22 and the gripping portion 21 of the handle 20, so as to allow the rotation of the gripping portion 21 with respect to the constraining portion 22. When the handle 20 is mounted on the stem 2, the joint 27 is thus configured to allow the rotation of the gripping portion 21 with respect to the stem 2 of the device 1.

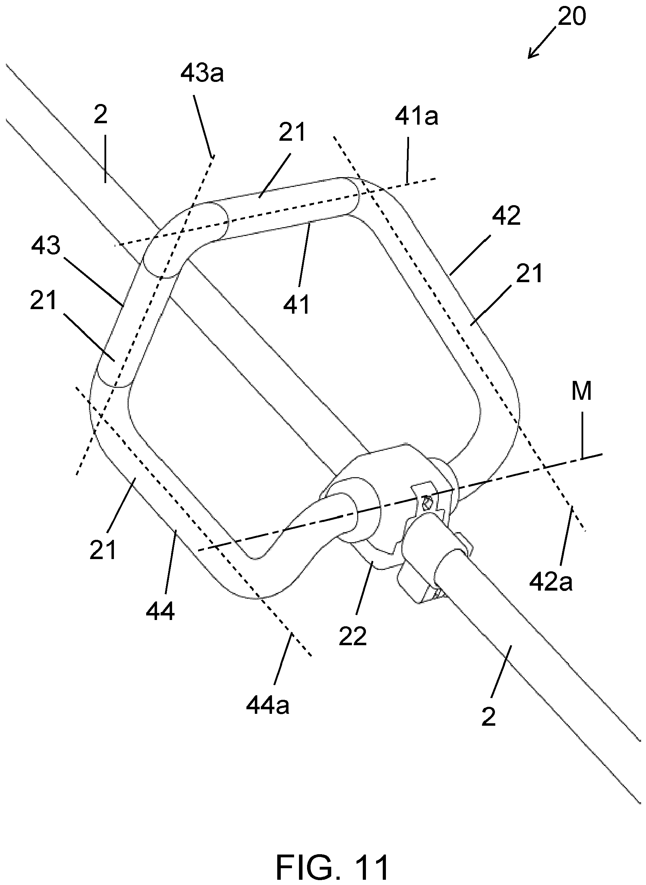

In the embodiment shown in figures 11 and 12, the gripping portion 21 comprises a first gripping section 41 extending along a first direction 41a. The first section 41 can have a substantially cylindrical or elliptical shape, so as to facilitate gripping by the operator. The first section can have a diameter comprised between 20 mm and 35 mm, in particular between 24 mm and 28 mm.

The first section 41 preferably extends in a straight manner along the first direction 41a (alternatively the first direction 41a can follow, at least in part, an arcuate trajectory). In particular, the first section 41 can extend for a length comprised between 100 mm and 400 mm, in particular between 150 mm and 250 mm. As shown in figures 11 and 12, the first section 41 is transverse to the longitudinal direction of the stem 2, preferably the first section 41 being substantially orthogonal to the longitudinal direction of the stem 2. In greater detail, the first direction 41a is transverse and is preferably orthogonal to the constraining axis of the seat of the constraining portion 22.

The first portion 41 is spaced with respect to the joint 27, such a distance remaining substantially fixed during a rotation of the gripping portion 21 around the registration axis M.

In the embodiment shown in figures 11 and 12, the gripping portion 21 further comprises a second gripping section 42 extending along a second direction 42a. The second section 42 can have a substantially cylindrical or elliptical shape, so as to facilitate gripping by the operator. In particular, the second section 42 can have a diameter comprised between 20 mm and 35 mm, in particular between 24 mm and 28 mm. The second section 42 preferably extends in a straight manner along the second direction 42a (alternatively the second direction 42a can follow, at least in part, an arcuate trajectory). According to an embodiment of the present invention, the second section 42 has a length comparable to the length of the first section 41. According to a further embodiment of the present invention, the second section 42 has a length greater than the length of the first section 41, the second section 42 extending in such a case for a length comprised between 150 mm and 500 mm, in particular between 200 mm and 300 mm.

The second direction 42a is transverse to the first direction 41a. Optionally, the second direction 42a is orthogonal to the first direction 41a.

The second section 42 extends in length substantially between the joint 27 or the constraining portion 22 and an end of the first section 41. The second section 42 thus connects the first section to the joint 27 or to the constraining portion 22.

The second section 42 is advantageously joined to one end of the first section 41 through a first curvilinear connecting section, in particular the first curvilinear connecting section extending seamlessly between the first section 41 and the second section 42 of the handle.

Preferably, the first section 41 and the second section 42, and optionally also the first curvilinear connecting section, have the same radial dimension, i.e., the same diameter.

Furthermore, the first section 41 and the second section 42, and optionally also the first curvilinear connecting section, define a single piece.

In the embodiment shown in figures 11 and 12, the gripping portion 21 further comprises a third gripping section 43 extending along a third direction 43a, such that the first section 41 is interposed between the second section 42 and the third section 43. In other words, the first section 41 extending in length between a first end and a second end, the second section 42 is connected to the first end of the first section 41, while the third section 43 is connected to the second end of the first section 41. The first section 41, the second section 42 and the third section 43 are advantageously joined and integral with each other to define a single piece.

The third section 43 can have a substantially cylindrical or elliptical shape, so as to facilitate gripping by the operator. In particular, the third section 43 can have a diameter comprised between 20 mm and 35 mm, in particular between 24 mm and 28 mm. The third section 43 preferably extends in a straight manner along the third direction 43a (alternatively the third direction 43a can follow, at least in part, an arcuate trajectory). According to an embodiment of the present invention, the third section 43 has a length comparable to the length of the first section 41. According to a further embodiment of the present invention, the third section 43 has a length less than the length of the first section 41, the third section 43 extending in such a case for a length comprised between 50 mm and 300 mm, in particular between 120 mm and 230 mm.

The third direction 43a is transverse to the first direction 41a, optionally, the third direction 43a being orthogonal to the first direction 41a. Furthermore, the third direction 43a is transverse, and optionally orthogonal, to the second direction 42a. It follows that the first direction 41a, the second direction 42a and the third direction 43a are transverse, and optionally orthogonal, to each other.

The third section 43 is advantageously joined to the second end of the first section 41 through a second curvilinear connecting section. In particular, the second curvilinear connecting section extends seamlessly between the first section 41 and the third section 43 of the handle.

Preferably, the first section 41 and the third section 43, and optionally also the second curvilinear connecting section, have the same radial dimension, i.e., the same diameter. In particular, the first section 41, the second section 42, the third section 43, and optionally also the first curvilinear connecting section and the second curvilinear connecting section, have the same radial size, i.e., the same diameter.

In the embodiment shown in figures 11 and 12, the gripping portion 21 further comprises a fourth gripping section 44 extending along a fourth direction 44a, such that the fourth section 44 is interposed between the third section 43 and the joint 27 or the constraining portion 22. In other words, the third section 43 extending in length between a first end and a second end, the first end of the third section 43 is connected to the first section 41, while the second end of the third section 43 is connected to the fourth section 44. The first section 41, the second section 42, the third section 43 and the fourth section 44 can be joined and integral with each other to define a single piece.

The fourth section 44 can have a substantially cylindrical or elliptical shape, so as to facilitate gripping by the operator. The fourth section 44 can have a diameter comprised between 20 mm and 35 mm, in particular between 24 mm and 28 mm.

The fourth section 44 preferably extends in a straight manner along the fourth direction 44a (alternatively the fourth direction 44a can follow, at least in part, an arcuate shape). According to an embodiment of the present invention, the fourth section 44 has a length comparable to the length of the second section 42. Therefore, the second section 44 can extend for a length comprised between 150 mm and 500 mm, in particular between 200 mm and 300 mm.

The fourth direction 44a is transverse to the third direction 43a. Optionally, the fourth direction 44a is orthogonal to the third direction 43a. Furthermore, the fourth direction 44a is transverse, and optionally orthogonal, to the first direction 41a. In fact, the first direction 41a, the third direction 43a and the fourth direction 44a are transverse, and optionally orthogonal, to each other. According to an embodiment of the present invention, the fourth direction 44a is parallel to the second direction 42a. According to a further embodiment of the present invention, the fourth direction 44a is transverse to the second direction 42a, with an angle of incidence such that the distance between the ends of the second section 42 and the fourth section 44 adjacent to the constraining portion 22 is less than the distance between the ends of the second section 42 and the fourth section 44 adjacent to the first section 41 and the third section 43, respectively. It should be noted that the fourth direction 44a and the first direction 41a are spaced apart from each other by a distance substantially equal to the length of the third section 43. Similarly, the third direction 43a is spaced from the second direction 42a by a distance substantially equal to the length of the first section 41. The fourth section 44 can be joined to the third section 43 through a third curvilinear connecting section. In particular, the third curvilinear connecting section extends seamlessly between the third section 43 and the fourth section 44 of the handle.

Preferably the fourth section 44 and the third section 43, and optionally also the third curvilinear connecting section, have the same radial dimension, i.e., the same diameter. In particular, the first section 41, the second section 42, the third section 43, the fourth section 44, and optionally also the first curvilinear connecting section, the second curvilinear connecting section and the third curvilinear connecting section have the same radial size, i.e., the same diameter. In other words, the gripping portion 21 of the handle 20 can have a radial dimension, i.e., a substantially constant diameter.

The joint 27 and/or the constraining portion 22 are interposed between the second section 42 and the fourth section 44.

In the embodiment shown in figures 11 and 12, a first plane passes through the first section 41 and the second section 42. In other words, the first plane crosses both the first section 41 and the second section 42. The first plane can be transverse, and optionally orthogonal, to the constraining axis of the seat of the constraining portion. In particular, when the handle is mounted on the stem 2, the first plane can be transverse, and optionally orthogonal, to the longitudinal direction of the stem 2. Alternatively, in an embodiment not shown, the first plane can be substantially parallel to the constraint axis of the seat of the constraining portion, and thus to the longitudinal axis of the stem 2.

In the embodiment shown in figures 11 and 12, a second plane passes through the first section 41 and the third section 43. In other words, the second plane crosses both the first section 41 and the third section 43. The second plane can be transverse, and optionally orthogonal, to the constraining axis of the seat of the constraining portion 22. In particular, when the handle is mounted on the stem 2, the second plane can be transverse, and optionally orthogonal, to the longitudinal direction of the stem 2.

The first plane and the second plane can be transverse, and optionally orthogonal, to each other in the embodiment shown in figures 11 and 12. In particular, the first plane and the second plane define therebetween an inclination angle comprised between 45° and 105°, preferably comprised between 60° and 105°, more preferably comprised between 60° and 90°, even more preferably about 70°.

However, in an embodiment not shown in the accompanying figures, the first plane and the second plane can be parallel to, and optionally coincident with, each other.

It should be noted that, in the embodiment of the handle shown in figures 11 and 12, the constraining portion 22 or the joint are external to, in particular spaced from, at least one among the first plane and the second plane. In particular, in the embodiment of the handle shown in Figures 11 and 12, both the joint 27 and the constraining portion are external to both the first plane and the second plane. Such a feature defines the particular three-dimensional shape of the handle 20.

The second plane can be parallel to, and spaced apart from, the registration axis M of the joint 27 of the handle. In particular, the distance between the second plane and the registration axis M is comprised between 100 mm and 60 mm and is fixed during a rotation of the gripping portion 21 around the registration axis M.

In contrast, the second plane can vary the inclination thereof with respect to the longitudinal direction of the stem 2 during a rotation of the handle 20 around the registration axis M.

A third plane passes through the third section 43 and the fourth section 44. The third plane can be transverse, and optionally orthogonal, to the first plane. Furthermore, the third plane can be transverse, and optionally orthogonal, to the second plane.

The third plane can be parallel to the constraining axis of the seat of the constraining portion 22. In particular, the third plane can be parallel to the longitudinal direction of the stem 2.

The first plane, the second plane and the third plane are transverse to each other. It should be noted that at least one among the first plane and the second plane is transverse, optionally orthogonal, to the longitudinal direction of the stem 2. In particular, the second plane is perpendicular to the longitudinal direction of the stem 2, while the third plane is parallel to the constraining axis of the seat of the constraining portion 22.

The third plane is transverse, and optionally orthogonal, to the registration axis M of the joint 27 of the handle 20. In particular, the third plane remains transverse, and optionally perpendicular, during a rotation of the gripping portion 21 around the registration axis M.

The configuration of the handle 20 referred to in figures 11 and 12 is significantly different from the background art, in that the second section 42 and the fourth section 44 are spaced apart from each other both along the direction defined by the first section 41, and along the direction defined by the third section 43. Therefore, the operator is allowed to comfortably grasp both the second section 42 and the fourth section 44 also following a rotation of the device 1 around the longitudinal axis of the stem 2. The three-dimensionality of such a configuration allows the gripping portion of the handle 20 to provide the operator with two distinct planes, in particular substantially orthogonal to each other, for gripping the handle 20 and grasping the device 1. Consequently, the operator can comfortably grasp the device 1 both when the work head 10 is arranged parallel to the ground (so as to be able to use the device 1 as a brush cutter or as a turf trimmer), and when the work head 10 is arranged orthogonally to the ground (so as to be able to use the device 1 as a hedge trimmer).

A second advantageous configuration for the handle 20 is described below, such a second advantageous configuration being independent of the first advantageous configuration previously described. However, it is intended to specify that the first advantageous configuration and the second advantageous configuration are mutually non-exclusive, whereby embodiments of the handle 20 which implement both the teachings of the first advantageous configuration and the teachings of the second advantageous configuration are obviously possible.

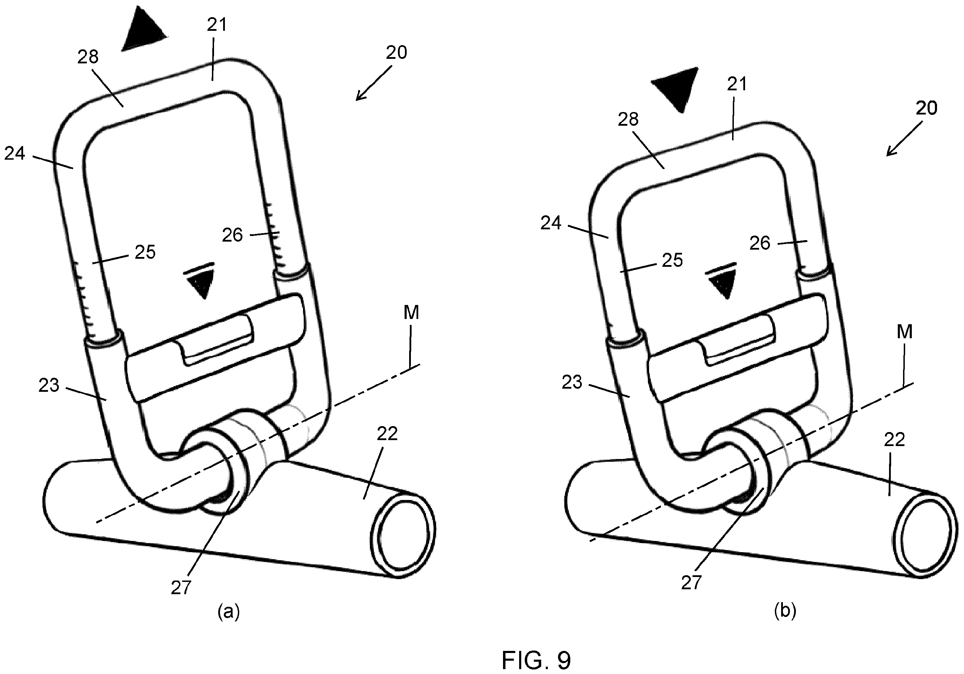

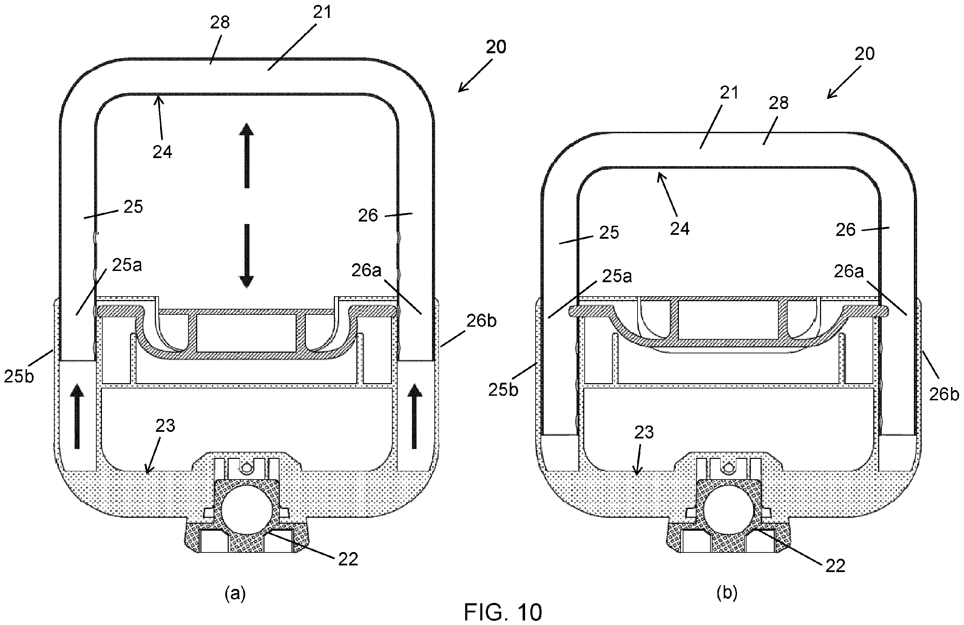

An embodiment of the handle 20 according to the second advantageous configuration is shown by way of non-limiting explanation in figures 9a and 9b and according to a sectional view in figures 10a and 10b. In such an embodiment, the handle 20 is an extensible and/or extendable type handle 20, in which the extension of the gripping portion 21 is adjustable by a user.

The gripping portion 21 comprises at least one base portion 23 and at least one adjustment portion 24. The base portion 23 is interposed between the adjustment portion 24 and the constraining portion 22. In particular, the base portion 23 can be rigidly constrained to the constraining portion 22, or can be rotatably movable around the constraining portion by means of the joint 27. If the handle comprises the joint 27, the base portion 23 is connected to the joint 27, so that the latter is operatively interposed between the base portion 23 and the constraining portion 22. The base portion 23 can have a substantially "U" shape.

The adjustment portion 24 is movable towards and away from the base portion 23, to define the extensible and/or extendable handle 20. In particular, an end portion of the adjustment portion 24 defines a variable distance with respect to the base portion 23. The adjustment portion 24 can have a substantially inverted "U" shape. The adjustment portion 24 is positionable, relative to the base portion 23, at least in a proximal position, in which the adjustment portion 24 has a first distance from the base portion 23, and a distal position, in which the adjustment portion 24 has a second distance from the base portion 23, the first distance being less than the second distance.

The distal position is particularly suitable when the operator is of high stature, since such a position allows a gripping of the handle 20 at a greater height with respect to the ground and therefore prevents the operator from having to bend down, or more generally having to assume uncomfortable postures to be able to grasp the device 1. The proximal position is instead more ergonomic for an operator of low stature.

In other words, the extension of the handle 20, i.e., the overall size given in combination by the adjustment portion 24 and the base portion 23, depends on the position assumed by the adjustment portion 24 relative to the base portion 23, varying discretely or continuously between the distal position (shown in figures 9a and 10a) and the proximal position (shown in figures 9b and 10b).

The handle 20 is profitably configured to provide a discrete number of extensions of the gripping portion 21, so that the adjustment of the extension of said gripping portion 21 is performed by the user by means of a step of selecting one among the available extensions of the gripping portion 21. For example, the adjustment portion 24 can be positionable, relative to the base portion 23, at one or more, e.g., two or three, positions interposed between the distal position and the proximal position.

Alternatively, the adjustment portion 24 can be movable between the proximal position and the distal position and vice versa in a continuous manner, in which case the adjustment portion 24 can be locked in any position interposed between the distal position and the proximal position.

The handle 20 is preferably configured to define, between the proximal position and the distal position of the adjustment portion 24, a stroke comprised between 30 mm and 300 mm, in particular between 50 mm and 200 mm, more in particular between 50 mm and 150 mm.

The adjustment portion 24 comprises at least one transverse rod 28 which extends to define a transverse section of the gripping portion 21, said transverse section being in particular substantially orthogonal to the constraining axis of the seat of the constraining portion. In particular, the transverse rod 28 defines a transverse section, in particular substantially orthogonal, to the longitudinal direction of the stem 2. Such a transverse section, optionally orthogonal, during the transition from the proximal position to the distal position and vice versa of the adjustment portion 24, preserves substantially the same orientation with respect to the longitudinal direction of the stem 2.

The gripping portion 21 of the handle shown in figures 9 can comprise a first lateral rod 25 and a second lateral rod 26. The first lateral rod 25 and the second lateral rod 26 are extendable, so as to define the proximal position and the distal position of the adjustment portion 24. In particular, the first lateral rod 25 and the second lateral rod 26 can extend in length along respective substantially straight trajectories and optionally parallel to each other. The transverse rod 28 is interposed in connection between the first lateral rod 25 and the second lateral rod 26, extending in particular seamlessly between end portions of the first lateral rod 25 and the second lateral rod 26.

The gripping portion 21 further comprises at least one transverse bar, advantageously associated with the base portion 23 and also interposed in connection between the first lateral rod 25 and the second lateral rod 26. Such a transverse bar can be substantially parallel to the transverse rod 28 and therefore substantially parallel to the registration axis M of the handle 20. In particular, the transverse bar (similarly to the transverse rod 28) can preserve the parallelism with the registration axis M during a rotation of the gripping portion 21 around the registration axis M.

The first lateral rod 25 and the second lateral rod 26 can respectively comprise a respective first element 25a, 26a and a respective second element 25b, 26b, in which the first element 25a, 26a is in sliding coupling with the second element 25b, 26b, e.g., in telescopic coupling with the second element. The distal position of the adjustment portion 24 is defined by a minimum penetration of the first element in the second element, as shown in figures 9a and 10a. In contrast, the proximal position of the adjustment portion 24 is defined by a maximum penetration of the first element in the second element, as shown in figures 9b and 10b. For example, the adjustment portion 24 can comprise the first element 25a, 26a respectively of the first lateral rod 25 and the second lateral rod 26, while the base portion 23 can comprise the second element 25b, 26b respectively of the first lateral rod 25 and the second lateral rod 26.

At least one among the first lateral rod 25 and the second lateral rod 26 comprises a locking system configured to lock the adjustment portion 24 selectively in the distal position, in the proximal position and optionally in one or more intermediate positions interposed between the proximal position and the distal position. In an embodiment reported merely by way of non-limiting example, the locking system can comprise a plurality of notches made on the first element and at least one dentil associated with the second element, the dentil thus being housable in one of the notches depending on the desired extension for the handle 20. The engagement between the dentil and the respective notch thus determines the locking of the adjustment portion 24 in the desired position. It should be noted that the locking system can be housed in both the first and the second lateral rod 25, 26.

The handle 20 further comprises a release system configured to inhibit the locking system, for example so as to allow the user to execute an adjustment of the position of the adjustment portion 24. The release system can comprise a button or lever in operating connection with the dentil so as to separate the dentil from the notches. In fact, pressing the button or switching the lever corresponds to a movement of the dentil away from the notch in which it was housed, so that the first element of a lateral rod becomes free to move with respect to the second element of the same lateral rod.

In a preferred embodiment (as shown in figures 9 and 10), both the first lateral rod 25 and the second lateral rod 26 comprise a respective locking system, while the release system is shared between the first lateral rod 25 and the second lateral rod 26. The release system can comprise a button or a lever arranged at the transverse bar of the gripping portion 21.

Advantageously, as shown in figure 9a and Figure 9b, the release system comprises a button extending longitudinally and arranged in the centre of the transverse bar and facing the transverse rod 28. Thereby, the operator can exert a pressure on the release button indifferently with the thumb of the right hand or with the thumb of the left hand and without leaving the grip of the adjustment portion 21 of the handle 20. Advantageously, the release button is in a single body with the right and left locking dentils, such a single body being made of a material (for example a plastic or metallic material) suitably deformable, so as to obtain, upon pressing the button, a contraction of the end portions of such a single body which is sufficient to free the locking dentils from the notches in which they were housed.

In order to convert a downward movement of the button into a movement towards the centre of the dentils, ribs suitable to cause an inflection of the portions of the single body interposed between the button and the dentils are obtained inside the second transverse rod (as can be appreciated from figure 10a).

In an embodiment of the present invention, the elasticity of the material of which the single body is composed is capable, upon release of the button, of automatically restoring the locking condition, i.e., the condition shown in figure 10b. In an alternative embodiment of the present invention, the single body is instead associated with at least one spring which acts in contrast to the pressing of the button, automatically restoring the locking condition upon release of the button.

Lastly, it should be noted that, in the embodiment of the handle 20 depicted in figures 10a and 10b, the transverse bar forms a single body (for example obtained by interlocking assembly and/or by means of screws two half-shells) with the rest of the base portion 23. The base portion 23 can be made of plastic material. The adjustment portion 24 can instead be made of metallic material, advantageously surface-coated in a high friction coefficient material, so as to allow the operator to exert a firmer grip on the handle 20.

### ADVANTAGES OF THE INVENTION

The present invention allows to obtain important advantages. In particular, the possibility to easily vary (without interrupting the grip) the orientation of the work head significantly reduces the duration of the maintenance operations. In fact, the operator is free to vary the orientation of the work head during the execution of the maintenance operations, without necessarily having to suspend the work. For example, during the execution of maintenance operations, the operator is capable of varying the inclination of the work head by moving the handle while keeping the grip firmly on the handle itself.

Furthermore, the present invention, by facilitating the variation of orientation of the work head during work operations, allows to reduce the stress on the operator, reducing the risk of trauma, for example muscular, resulting from incorrect postures maintained by the operator over time. In fact, the ease of varying the inclination of the work head allows the operator to constantly place himself in the best possible position to execute the work, consequently avoiding non-optimal postures. Furthermore, the safety in the use of the device is greatly increased.

The invention allows the operator to follow, during maintenance operations, the course of the ground while maintaining the correct upright posture. This is particularly useful in steep land or with slopes, as the operator is prevented from having to assume uncomfortable and dangerous positions to follow the course of the land.

The invention further allows the operator to adjust the inclination of the work head and/or the cutting head by means of the same handle with which the tool is controlled. The operator can thus save time and make adjustments in a comfortable and safe position, without the use of tools such as screwdrivers or Allen wrenches being required.

The invention also allows the operator, thanks to the envisaged parking position, to store the tool vertically, thus not being constrained to specific positions and not having to envisage the wall mounting of specific attachments or hooks.

The advantages of the present invention are especially appreciated by comparing the object of the following claims with the known technical solution disclosed in US6,260,278B1, with respect to which the present invention allows to obtain a considerably higher comfort of use, both because the user does not need to interrupt the grip and bend to perform the operations of switching the orientation of the work head with respect to the stem, and because the adjustment continuity of the orientation of the work head allows a perfect adaptation of the inclination of the work head, so that the cutting head can be constantly kept parallel to the ground.

As for the above-described innovative configurations of the handle, the advantages obtained with respect to the known art are equally evident.

The handle configuration with adjustable extension, an example of which can be found in figures 9 and 10, allows the operator to adjust the features of the handle to his stature, thus maintaining a correct upright position during the execution of maintenance operations. For example, an operator of high stature can conveniently arrange the adjustable portion of the handles in the distal position or in a position close to the distal one, thus avoiding having to bend his trunk forward to execute maintenance operations.

The handle configuration with gripping sections lying on two planes transverse to each other (in particular substantially orthogonal to each other), an example of which can be found in figures 11 and 12, allows the operator to grip the device both vertically (thus arranging the cutting head parallel to the ground) and horizontally (thus arranging the cutting head orthogonally to the ground). In the first case the device can be used as a brush cutter or as a turf trimmer, in the second case the device can be used as a hedge trimmer. Thanks to the features of the handle, a considerable increase in the flexibility of use of the device is therefore obtained. Thanks to the features of the handle, it allows the user to maintain a firm, easy and safe grip of the device in any use of the device.

## Claims

1. Device (1) for executing maintenance operations in a land or garden, in particular suitable for use as a brush cutter and/or as a turf trimmer and/or as a hedge trimmer, said device (1) comprising:
i) a stem (2) extending in length between a first end portion (2a) and a second end portion (2b),
ii) a work head (10) configured to execute maintenance operations, said work head (10) being applied to said stem (2) at the first end portion (2a), and
iii) a handle (20) configured to allow the gripping of said device (1) during maintenance operations, said handle (20) being applied to said stem (2) at the second end portion (2b) or at a portion of said stem (2) interposed between the first end portion (2a) and the second end portion (2b),
in which the orientation of said work head (10) with respect to said stem (2) is switchable at least between a first orientation and a second orientation,
wherein the arrangement, in particular position and/or orientation, of said handle (20) with respect to said stem (2) is switchable at least between a first arrangement, in particular first position and/or first orientation, and a second arrangement, in particular second position and/or second orientation,
**characterized in that** said handle (20) is operatively connected to said work head (10) and is configured to act as a selector member of said work head (10),
in which a switching and/or an adjustment in the arrangement of said handle (20) from said first arrangement to said second arrangement results in a simultaneous switching and/or adjustment of the orientation of said work head (10) from said first orientation to said second orientation and/or in which a switching and/or adjustment in the arrangement of said handle (20) from said second arrangement to said first arrangement results in a simultaneous switching and/or adjustment of the orientation of said work head (10) from said second orientation to said first orientation.

2. Device (1) according to claim 1, wherein the work head (10) and the handle (20) are rotatably movable around respective drive axes substantially parallel to each other, wherein said handle (20) is rotatably movable around the drive axis (M) thereof with respect to said stem (2) between the first arrangement and the second arrangement, wherein a rotation of said handle (20) around said drive axis (M) determines the switching and/or the adjustment of the orientation of said work head (10) from said first orientation to said second orientation and from said second orientation to said first orientation and wherein said drive axis (M) is transverse, substantially orthogonal, to said stem (2).

3. Device (1) according to claim 1 or claim 2, wherein the handle (20) is rotatably movable between said first arrangement and said second arrangement in a continuous manner, in particular in which the handle (20) is positionable in an ideally infinite number of intermediate arrangements, in particular intermediate positions and/or intermediate orientations, between said first arrangement and said second arrangement, and in which a movement of the handle (20) in a continuous manner between the first arrangement and the second arrangement determines a simultaneous movement of the work head (10) in a continuous manner between the first orientation and the second orientation.

4. Device (1) according to any one of the preceding claims, wherein:
i) a rotation of the handle (20) in a clockwise direction determines a rotation of the work head (10) in a counter-clockwise direction and/or in which a rotation of the handle (20) in a counter-clockwise direction determines a rotation of the work head (10) in a clockwise direction and/or
ii) the handle (20) and/or the work head (10) are rotatably movable by an angular stroke comprised between 30° and 180°, in particular comprised between 45° and 150°, preferably comprised between 80° and 150°, and/or
iii) said handle (20) has a distance from said work head (10), measured along said stem (2), greater than 200 mm, in particular greater than 300 mm, more in particular comprised between 300 mm and 1500 mm, even more in particular comprised between 600 mm and 1200 mm and/or
iv) the work head (10) comprises a cutting head configured to execute cutting maintenance operations, for example cutting a turfgrass or pruning operations for example of hedges, in particular wherein the cutting head comprises a turf-trimming head or lawnmower (11) comprising one or more blades or one or more cutting wires, for example one or more Nylon wires, optionally wherein said turf-trimming head or lawnmower is integral with a rotary shaft around a rotation axis (W) to define the rotation, in particular a complete rotation, of said one or more blades or of said one or more wires, said rotation axis (W) of the cutting head being movable between said first orientation and said second orientation, and/or
v) the work head (10) comprises a pruning blade (12) extending in length along a main direction (MD), in particular wherein said pruning blade (12) is a hedge-trimming blade, optionally wherein said main direction (MD) is movable between said first orientation and said second orientation.

5. Device (1) according to any one of the preceding claims, wherein said device (1) further comprises a drive system (30) placed in connection between said handle (20) and said work head (10), said drive system (30) being configured to transfer a movement of the handle (20) to the work head (10),
optionally wherein the stem (2) is, at least in part, internally hollow and said drive system (30) is positioned inside the stem (2).

6. Device (1) according to any one of the preceding claims, wherein said device (1), in particular said drive system (30) comprises:
i) at least one traction cable, said traction cable being in particular configured to ideally support only traction stresses, optionally wherein at least one elastic return element is connected to the work head (10),
ii) a flexible rod or cable transmission, in particular said flexible rod or cable being configured to withstand traction and compression stresses, said flexible rod or cable transmission comprising:
- a first pulley (34) integral with the handle (20),
- a second pulley (35) integral with the work head (10),
- a flexible rod or a cable (36) interposed in connection between said first pulley and said second pulley, and/or
iii) a belt or chain transmission interposed in connection between the work head (10) and said handle (20), said belt or chain transmission comprising:
- a first toothed wheel integral with the handle (20),
- a second toothed wheel integral with the work head (10),
- a chain or belt wound around said first toothed wheel and said second toothed, and/or
iv) a rigid transmission bar, in particular configured to support traction and compression stresses, interposed in connection between the work head (10) and said handle (20) and/or
v) a rack transmission, in particular wherein said rack transmission comprises:
- a first toothed wheel (31) integral with the handle (20),
- a second toothed wheel (32) integral with the work head (10),
- a bar (33) interposed between said first toothed wheel and said second toothed wheel, said bar (33) comprising at least one toothing engaged with said first toothed wheel and/or with said second toothed wheel, optionally wherein said bar extends in length between a first end and a second end, wherein the first end comprises a first toothing engaged with the first toothed wheel of the handle (20) and wherein the second end comprises a second toothing engaged with the second toothed wheel of the work head (10).

7. Device (1) according to any one of the preceding claims, wherein said device (1), in particular said drive system (30) comprises:
i) a position detector operatively connected to the handle (20) and configured to detect an arrangement of said handle (20) between the first arrangement and the second arrangement, optionally said position detector comprising an angular detector of the angular position of the handle (20),
ii) an electric actuator operatively connected to the work head (10) and configured to move the work head (10) between the first orientation and the second orientation and
iii) a control unit operatively connected to said position detector and to said electric actuator, said control unit being configured to:
- detect an arrangement of the handle (20) between said first arrangement and said second arrangement based on a signal emitted by the position detector and
- as a function of the detected arrangement of the handle (20), command said electric actuator to move the work head (10) in a corresponding orientation between said first orientation and said second orientation.

8. Device (1) according to any one of the preceding claims, wherein, in the first arrangement of the handle (20) and in the first orientation of the work head (10), the extension direction (ED) of the handle (20) transversely to the drive axis (M) thereof defines, with the extension direction of a portion of the stem (2) interposed between said handle (20) and said first end portion (2a), an angle (α) comprised between 20° and 90°, in particular between 45° and 70°, and/or wherein, in the second arrangement of the handle (20) and in the second orientation of the work head (10), the extension direction (ED) of the handle (20) transverse to the drive axis (M) thereof defines, with the extension direction of a portion of the stem (2) interposed between said handle (20) and said first end portion (2a), an angle (β) comprised between 130° and 180°, in particular between 140° and 165°, and/or wherein, in the first arrangement of the handle (20) and in the first orientation of the work head (10), the rotation axis (W) of the rotary shaft of the cutting head defines, with the longitudinal direction of the stem (2), an angle comprised between 0° and 30°, in particular between 0° and 20°, and/or wherein, in the second arrangement of the handle (20) and in the second orientation of the work head (10), the rotation axis (W) of the rotary shaft of the cutting head defines, with the longitudinal direction of the stem (2), an angle comprised between 75° and 100°, in particular between 80° and 90°, and/or wherein, in the first arrangement of the handle (20) and in the first orientation of the work head (10), the rotation axis (W) of the rotary shaft of the cutting head is substantially parallel to the longitudinal direction of the stem (2) and/or wherein, in the second arrangement of the handle (20) and in the second orientation of the work head (10), the rotation axis (W) of the rotary shaft of the cutting head is substantially parallel to the longitudinal direction of the stem (2).

9. Device (1) according to any one of the preceding claims, wherein the device (1) comprises a locking system of the handle (20) configured to maintain said handle (20) in a desired position between said first arrangement and said second arrangement during maintenance operations and/or to maintain said handle (20) in a desired position chosen among a plurality, in particular from an ideally infinite number, of arrangements between said first arrangement and said second arrangement.

10. Device (1) according to any one of the preceding claims, wherein:
i) said device (1) is devoid of any selector member which is distinct and separate from said handle (20) configured to allow the gripping of said device (1) during maintenance operations and which is operatively connected to said work head (10) and/or configured to allow an operator to perform a switching in the arrangement, in particular in the orientation, of said work head (10) and/or
ii) gripping any part of said device (1) which is not said work head (10) and which is not said handle (20) configured to allow the gripping of said device (1) during maintenance operations, said part of said device (1) being in particular interposed between said work head (10) and said handle (20), said part of said device (1) is devoid of any selector member operatively connected to said work head (10) and/or configured to allow an operator to perform a switching in the arrangement, in particular in the orientation, of said work head (10) and/or
iii) said handle (20) configured to allow the gripping of said device (1) during maintenance operations is the only member of said device (1) to be operatively connected to said work head (10) and/or to be configured to fulfil a function of or selector member of said work head (10), in particular of the orientation of said work head (10), notably wherein, taking any further member of said device (1), said further member is not operatively connected to said work head (10) and/or is not configured to fulfil said function of selector member of said work head (10).

11. Device (1) for executing maintenance operations in a land or garden, in particular suitable for use as a brush cutter and/or as a turf trimmer, said device (1) being notably but not exclusively according to any one of the preceding claims,
wherein said device (1) comprises:
i) a stem (2) extending in length between a first end portion (2a) and a second end portion (2b) and
ii) a work head (10) configured to execute maintenance operations, said work head (10) being applied to said stem (2) at the first end portion (2a),
**characterized in that** said device (1) is configurable in a parking configuration and/or can assume a parking configuration and/or has an aptitude to assume a parking configuration,
wherein, in said parking configuration, the work head (10) is supported on the ground, notably to define a support plane (SP), and the stem (2) is in a transverse position, in particular substantially orthogonal, to the ground.

12. Device (1) according to claim 11, wherein said parking configuration is maintained autonomously by the device (1) in a stable manner without the aid of a further support, in particular without the aid of a wall support.

13. Device (1) according to claim 1 or claim 2, wherein the work head (10) comprises a cutting head (11) configured to execute maintenance operations of a turfgrass, for example cutting operations of a turfgrass, and wherein, in said parking configuration, the rotation axis (W) of a rotary shaft coupled to the cutting head (11) is substantially orthogonal to the support plane (SP), in particular orthogonal to the ground, and/or is substantially parallel to the longitudinal direction of the stem (2).

14. Device (1) according to any one of the preceding claims, wherein:
i) said work head (10) further comprises a protective casing (16) for enclosing said cutting head (11), said protective casing (16) being notably intended to prevent grass fragments and/or debris from striking a user during maintenance operations, and wherein said protective casing (16) exhibits, on the side facing the ground, a support surface, said support surface defining notably the support plane (SP) of said device (1) in said parking configuration, and/or
ii) the support plane (SP) of said device (1) in said parking configuration is defined by a support surface exhibited by a protective casing (16) enclosing said cutting head (11), said protective casing (16) being notably intended to prevent grass fragments and/or debris from striking a user during maintenance operations.

15. Device (1) according to any one of the preceding claims, wherein the orientation of said work head (10) with respect to said stem (2) is switchable and/or adjustable at least between a first orientation and a second orientation, so as to allow a user, during the use of the device (1), to adapt the orientation of said work head (10) to the slope of the ground and/or to use the device (1) as a hedge trimmer, wherein, when said device (1) assumes said parking configuration, the work head (10) is arranged in the first orientation or in an intermediate orientation between the first orientation and the second orientation, optionally wherein:
i) said device (1) further comprises a handle (20) configured to allow the gripping of said device (1) during maintenance operations, said handle (20) being applied to said stem (2) at the second end portion (2b) or at a portion of said stem (2) interposed between the first end portion (2a) and the second end portion (2b),
ii) the arrangement, in particular position and/or orientation, of said handle (20) with respect to said stem (2) is switchable and/or adjustable at least between a first arrangement, in particular first position and/or first orientation, and a second arrangement, in particular second position and/or second orientation,
iii) said handle (20) is operatively connected to said work head (10) and is configured to act as a selector member of said work head (10),
iv) a switching and/or an adjustment in the arrangement of said handle (20) from said first arrangement to said second arrangement results in a simultaneous switching and/or adjustment of the orientation of said work head (10) from said first orientation to said second orientation and
v) a switching and/or an adjustment in the arrangement of said handle (20) from said second arrangement to said first arrangement results in a simultaneous switching and/or adjustment of the orientation of said work head (10) from said second orientation to said first orientation.
